# EUROPEAN PATENT SPECIFICATION

(11) **EP 4 167 127 B1**
(45) Date of publication and mention of the grant of the patent: **25.02.2026**
(21) Application number: 21834643.5
(22) Date of filing: 30.06.2021
(51) Int. Cl.: G06N 3/04, G06N 3/08, G06N 3/0464, G06V 10/80, G06V 10/82

(54) **METHOD FOR IDENTIFYING SANITARY CONDITION OF OBJECT, AND RELATED ELECTRONIC DEVICE**
VERFAHREN ZUR IDENTIFIZIERUNG DES SANITÄRZUSTANDS EINES OBJEKTS UND ZUGEHÖRIGE ELEKTRONISCHE VORRICHTUNG
PROCÉDÉ D'IDENTIFICATION DE L'ÉTAT SANITAIRE D'UN OBJET, ET DISPOSITIF ÉLECTRONIQUE ASSOCIÉ

(30) Priority: 30.06.2020 CN 202010615484
(43) Date of publication of application: 19.04.2023
(73) Proprietor: Huawei Technologies Co., Ltd., Longgang District, Shenzhen, Guangdong 518129 (CN)
(72) Inventor: DAI, Tongwu, Shenzhen, Guangdong 518129 (CN)
(74) Representative: Gill Jennings & Every LLP
(86) International application number: PCT/CN2021/103541
(87) International publication number: WO 2022/002129

(56) References cited:
- CN-A- 106 415 239
- CN-A- 110 879 999
- CN-A- 112 257 508
- CN-Y- 2 781 406
- JP-A- H05 303 642
- US-A1- 2013 245 417
- US-A1- 2013 245 417
- INKINEN JENNI ET AL: "Contamination detection by optical measurements in a real-life environment: A hospital case study", vol. 13, no. 1, 6 November 2019 (2019-11-06), DE, XP093090145, ISSN: 1864-063X, Retrieved from the Internet <URL:https://onlinelibrary.wiley.com/doi/full-xml/10.1002/jbio.201960069> [retrieved on 20231010], DOI: 10.1002/jbio.201960069

## Description

### TECHNICAL FIELD

This application relates to the field of artificial intelligence and computer vision in a corresponding subfield, and in particular, to a method for identifying a hygiene status of an object and a related electronic device.

### BACKGROUND

In natural science, the micro world usually refers to a material world at a level of particles such as molecules and atoms. There are many microorganisms in the micro world that are closely related to our life. It is difficult to observe the micro world with naked eyes. If we can observe categories and density distribution of bacteria in life, it can help us know more about our living environments.

Generally, the following work needs to be done to identify a bacterium. First, observe an individual morphology of the bacterium in a conventional microscope, including Gram staining, distinguishing between a Gram-positive bacterium (G+ bacterium) or a Gram-negative bacterium (G- bacterium), and observing a shape and a size of the bacterium, whether the bacterium has a spore, a position of the spore, and the like in the conventional microscope. Then, observe a strain morphology in the conventional microscope, mainly including observing features such as a morphology, a size, an edge status, gibbosity, transparency, a color and luster, and a smell of a strain. Next, perform a dynamic test on the bacterium to check whether the bacterium can move and a flagellation type (amphitrichous or peritrichous) of the bacterium. Finally, perform experiments of physiological and biochemical reactions and a serological reaction on the bacterium. Based on results of the above experimental items, a bacterial category is determined by referring to a microbial classification table. However, the conventional microscope is expensive, large and bulky, and is difficult to apply in daily life. In addition, ordinary people have no experimental conditions and professional knowledge to identify the bacterium.

Therefore, how to conveniently identify the bacterial category in daily life and help a user understand the micro world becomes a problem that needs to be resolved.

US 2013/245417 A1 discloses a method and system for diagnosing and treating infection or disease.

INKINEN JENNI ET AL: "Contamination detection by optical measurements in a real-life environment: A hospital case study", JOURNAL OF BIOPHOTONICS, vol. 13, no. 1, 6 November 2019 discloses methods for detecting human eye invisible stains.

### SUMMARY

The invention is set out in the appended set of claims.

Embodiments of this application provide a method for identifying a hygiene status of an object and a related electronic device, so that an electronic device can determine a hygiene status of an object, and provide an intelligent prompt. The "object" in this specification may be a part (for example, a hand or a foot) of a human body, or may be any object other than a person or a part of any object (for example, may be food such as a fruit, or a dish), or the like.

It should be noted that, in embodiments provided in this application, there may be a plurality of possible implementations for an execution sequence of steps, and some or all of the steps may be performed sequentially or in parallel.

According to a first aspect, this application provides a method for identifying a hygiene status of an object. The method includes: An electronic device determines a category of a first object. The electronic device collects a first image of the first object by using a first camera. The first image is a micro image. The electronic device outputs first prompt information based on the category and the first image of the first object. The first prompt information is used to indicate a hygiene status of the first object. That the electronic device determines the category of the first object may be that the electronic device determines the category of the first object, or the electronic device obtains a determined category of the first object from another device (for example, a server), or the electronic device determines the category of the first object based on information that is used to indicate the category of the first object and that is input by a user, or the like. That the electronic device outputs the first prompt information based on the category and the first image of the first object may be that the electronic device analyzes the category and the first image of the first object and outputs prompt information related to an analysis result, or the electronic device sends at least the first image to the another device (for example, the server), the another device performs analysis and sends an analysis result to the electronic device, and then the electronic device outputs prompt information related to the analysis result, or the like.

In the foregoing embodiment, there may be a plurality of possible implementations for an execution sequence of the steps. For example, the step that the electronic device determines the category of the first object may occur before, after, or at the same time as the step that the electronic device collects the first image of the first object by using the first camera.

To implement the method provided in the first aspect, the first camera may be a built-in microscopic camera of the electronic device, or may be an external microscopic camera 1. In a possible implementation, the external microscopic camera 1 may be communicatively connected to the electronic device. The external microscopic camera 1 may be installed on the electronic device, for example, clamped on a side edge of the electronic device. The electronic device obtains the micro image of the first object by using the microscopic camera 1 (the micro image may be an image obtained after the to-be-photographed object is magnified microscopically and then photographed), and determines first information of the first object based on the micro image. In some other implementations, an external microscopic camera 2 may be installed on a built-in camera of the electronic device, the electronic device may obtain the micro image of the first object by using the external microscopic camera 2 and the built-in camera, and the electronic device determines first information of the first object based on the micro image. There may be no communication connection between the external microscopic camera 2 and the electronic device, and the external microscopic camera 2 is only physically mounted on a surface of the built-in camera, to change content in an external field of view of the built-in camera (that is, magnify the to-be-photographed object). Then, the electronic device may obtain the micro image of the first object by using the built-in camera. In this implementation, the electronic device obtains the micro image (the first image) of the first object by using the external microscopic camera 2 and the built-in camera. The first camera in "the electronic device collects a first image of the first object by using a first camera" may be understood as at least one of the external microscopic camera 2 and the built-in camera.

Then, the electronic device performs comprehensive analysis with reference to the category of the first object and the first image of the first object (the first image may be understood as the micro image), determines the hygiene status of the first object, and provides the first prompt information. The hygiene status described in the first prompt information may be represented in a form of a score, and a higher score indicates a more hygienic object. The hygiene status may be alternatively represented in a form of a text description, for example, described by using a text, for example, "hygienic", "unhygienic", or "very hygienic". In other words, the user can conveniently observe a micro image of an object in life by using the electronic device (for example, a portable electronic device, for example, a mobile phone or a tablet computer), and can obtain a hygiene suggestion for the object. By using this method, the user can conveniently identify a bacterial category in daily life, and understand the micro world, and the electronic device determines a hygiene status of the object, and provides an intelligent hygiene prompt for the user.

With reference to the first aspect, in some embodiments, before the electronic device determines the category of the first object, the method further includes: The electronic device collects a second image of the first object by using a second camera (the second image may be understood as a macro image, and is different from the micro image. In the macro image, the object may be magnified at a specific magnification, but is not magnified at a higher magnification. In some example scenarios, the macro image may be alternatively understood as an image obtained by performing daily image shooting by using a camera currently frequently used in the mobile phone). In this case, that an electronic device determines a category of a first object specifically includes: The electronic device determines the category of the first object based on the second image. Herein, the second camera may be a camera (there may be one or more cameras). The electronic device obtains the second image of the first object by using the one or more cameras, to determine the category of the first object. The second image of the first object may include the first object, and may further include another object. When the second image includes a plurality of objects, the user may determine a concerned object as the first object in the second image in a manner, for example, performing a tap operation on a screen of the electronic device.

In some embodiments, the second image further includes a second object. The method further includes: The electronic device obtains a user operation for a display area of the second object, and outputs second prompt information that indicates a hygiene status of the second object. Specifically, in a possible implementation, the electronic device determines the category of the first object and a category of the second object based on the second image. When the electronic device obtains a user operation for a display area of the first object (for example, performing a tap on the display area of the first object on the second image by the user), the electronic device collects the first image of the first object by using the first camera, and outputs, based on the category of the first object and the first image of the first object, the first prompt information that indicates the hygiene status of the first object. When the electronic device obtains the user operation for the display area of the second object, the electronic device collects a first image of the second object by using the first camera, and outputs, based on the category of the second object and the first image of the second object, the second prompt information that indicates the hygiene status of the second object. In this manner, when the second image collected by the electronic device by using the second camera includes two or more objects, based on a received selection operation of the user for one of the objects, prompt information related to the object can be displayed, to improve user experience.

With reference to the first aspect, in some embodiments, that an electronic device determines a category of a first object includes: The electronic device determines the category of the first object based on a detected user operation. Herein, the user operation may be a user operation of inputting a voice/text, correction, a user operation of tapping an option, or the like. For example, when detecting voice information input by the user, the electronic device recognizes the voice information to determine the category of the first object, or when detecting text information entered by the user, the electronic device recognizes the text information to determine the category of the first object. In some implementations, after the electronic device identifies a category of an object, if the user wants to correct the category of the object, the user operation may be used to assist the electronic device in correctly determining the category of the object.

With reference to the first aspect, in some embodiments, that an electronic device determines a category of a first object specifically includes: The electronic device determines the category of the first object based on a second image that is of the first object and that is collected by the first camera. Herein, the first camera may be a microscopic camera, and a magnification of the microscopic camera may be adjusted. When the magnification of the microscopic camera is very low, the electronic device can determine a category of an object by collecting an image of the object by using the microscopic camera. When the magnification of the microscopic camera is adjusted to be sufficient to identify a bacterium, the electronic device can determine distribution of bacteria on the object by collecting a micro image of the object by using the microscopic camera.

In some embodiments, the method further includes: determining the first information of the first object based on the first image. There is an association relationship between the first information of the first object and the hygiene status of the first object, and the first information includes a category and a quantity of bacteria. In this manner, the hygiene status of the first object is determined by analyzing the category and the quantity of the bacteria on the first object.

In some embodiments, the first information may include at least one of texture information, air hole information, and a color and luster information. In this manner, a freshness degree of the first object (for example, a fruit or a vegetable) can be determined by analyzing at least one of information such as texture, an air hole, and a color and luster on the first object. The first prompt information output by the electronic device may be further used to indicate the freshness degree of the first object.

With reference to the first aspect, in some embodiments, the first information includes a quantity of first bacteria. When the quantity of first bacteria is a first quantity, the first prompt information indicates that the hygiene status of the first object is a first hygiene status. When the quantity of first bacteria is a second quantity, the first prompt information indicates that the hygiene status of the first object is a second hygiene status. Specifically, when the first quantity does not exceed a first threshold, the first hygiene status may be represented as hygienic, and when the second quantity exceeds the first threshold, the second hygiene status may be represented as unhygienic. When the first quantity exceeds the first threshold, the first hygiene status may be expressed as unhygienic, and when the second quantity exceeds a second threshold, the second hygiene status may be expressed as very unhygienic, where the second threshold is greater than the first threshold. In other words, a larger quantity of first bacteria indicates greater degree of impact on the hygiene status of the first object.

In some embodiments, different bacteria have different degrees of impact on the hygiene status of the first object. For example, when there is a pathogenic bacterium on the first object, it may be directly determined that the first object is unhygienic, or when there are common bacteria on the first object, whether the first object is unhygienic may be further determined by using a quantity of the common bacteria.

With reference to the first aspect, in some embodiments, that the electronic device outputs first prompt information includes: The electronic device displays the first image of the first object, and displays the first prompt information on the first image of the first object.

In some embodiments, the microscopic camera may be further started by using application software corresponding to the microscopic camera, and the application software may be installed on the electronic device.

In some embodiments, the prompt information includes a suggestion for improving the hygiene status of the first object. Herein, a reason why the first object is unhygienic may be identified based on different categories of the bacteria on the first object, to provide a corresponding suggestion. For example, the prompt information may be suggesting cleaning, suggesting high temperature heating, suggesting discarding, or the like.

With reference to the first aspect, in some embodiments, that the electronic device outputs first prompt information based on the category and the first image of the first object includes: The electronic device determines the hygiene status of the first object based on the first image and a knowledge graph corresponding to the category of the first object. The knowledge graph includes a common bacterial category corresponding to the category of the first object. The knowledge graph indicates an association rule between the hygiene status of the first object and the bacterial category. The association rule may be that, when a bacterium exists, it indicates that the first object is unhygienic. The association rule may be alternatively that, when a quantity of bacteria exceeds a threshold, it indicates that the first object is unhygienic.

In some embodiments, the first camera is the microscopic camera, the second camera is the camera, the electronic device is the mobile phone, and the category of the first object is a hand.

According to a second aspect, this application provides an electronic device, including one or more processors, one or more memories, and a touchscreen. The one or more memories are coupled to the one or more processors, and the one or more memories are configured to store computer program code. The computer program code includes computer instructions. When the one or more processors execute the computer instructions, the electronic device is enabled to perform the method in any one of the first aspect and the embodiments related to the first aspect. For details, refer to the foregoing related content.

According to a third aspect, an embodiment of this application provides a computer storage medium, including computer instructions. When the computer instructions are run on an electronic device, the electronic device is enabled to perform the method for identifying a hygiene status of an object according to any possible implementation of the foregoing any aspect.

According to a fourth aspect, an embodiment of this application provides a computer program product. When the computer program product runs on a computer, the computer is enabled to perform the method for identifying a hygiene status of an object according to any possible implementation of the first aspect.

### BRIEF DESCRIPTION OF DRAWINGS

FIG. 1a is a schematic diagram of a structure of an electronic device according to an embodiment of this application;
FIG. 1b is a schematic diagram of a structure of another electronic device according to an embodiment of this application;
FIG. 2a to FIG. 2c are a schematic diagram of a group of interfaces according to an embodiment of this application;
FIG. 3 is a schematic diagram of another group of interfaces according to an embodiment of this application;
FIG. 4a is a schematic diagram of still another group of interfaces according to an embodiment of this application;
FIG. 4b is a schematic diagram of still another group of interfaces according to an embodiment of this application;
FIG. 5 is a schematic diagram of still another group of interfaces according to an embodiment of this application;
FIG. 6 is a schematic diagram of still another group of interfaces according to an embodiment of this application;
FIG. 7a is a schematic diagram of still another group of interfaces according to an embodiment of this application;
FIG. 7b is a schematic diagram of still another group of interfaces according to an embodiment of this application;
FIG. 8a to FIG. 10 each are a schematic diagram of still another group of interfaces according to an embodiment of this application;
FIG. 11 is a conceptual diagram of an algorithm structure according to an embodiment of this application;
FIG. 12 is a structural diagram of knowledge graphs according to an embodiment of this application;
FIG. 13 is a schematic flowchart of a method for identifying a hygiene status of an object according to an embodiment of this application;
FIG. 14 is a schematic diagram of a structure of an electronic device according to an embodiment of this application; and
FIG. 15 is a schematic diagram of a software architecture according to an embodiment of this application.

### DESCRIPTION OF EMBODIMENTS

The following describes technical solutions in embodiments of this application with reference to the accompanying drawings. In descriptions of embodiments of this application, "/" indicates "or" unless otherwise stated. For example, A/B may indicate A or B. The term "and/or" in this specification describes merely an association relationship for describing associated objects, and indicates that three relationships may exist. For example, A and/or B may indicate the following three cases: Only A exists, both A and B exist, and only B exists. In addition, in the descriptions of embodiments of this application, "a plurality of" means two or more.

The following terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more.

Embodiments of this application provide a method for identifying a hygiene status of an object, which may be applied to an electronic device having a microscopic camera and a camera. The microscopic camera and the camera may work at the same time or sequentially in a preset sequence. The electronic device may collect an image of the object by using the camera, and identify a scene (for example, food, a hand, or a dining table) in the image (which may also be understood as identifying a category of the object in the image). The electronic device may further collect an image of a same object by using the microscopic camera, and identify micro information in the image. The micro information includes a category and a quantity of bacteria. For example, possible micro information in an image of an apple includes a yeast, an actinomycete, an edible fungus, and the like. Then, the electronic device may determine the hygiene status of the object by using scene information and the micro information that correspond to the object. By using this method, a user can conveniently observe distribution of microorganisms on an object in a living scenario, so that the user performs corresponding hygienic processing.

Embodiments of this application may be used to perform comprehensive analysis with reference to the scene information and the micro information that correspond to the object, determine the hygiene status of the object, and provide an intelligent prompt. The intelligent prompt may include a description of the hygiene status of the object, may further include a suggestion for improving the hygiene status of the object, may alternatively include a suggestion for a processing manner of the object, and the like. A manner in which the electronic device provides the prompt is not limited to a text, a voice, vibration, an indicator, and/or the like.

In a possible implementation, the microscopic camera may include a flat-field achromatic miniature objective lens. The miniature objective lens may have optical resolution of 2 µm, a magnification of approximately 20 to 400, and a field of view diameter of 5 mm.

First, the electronic device in embodiments of this application is described.

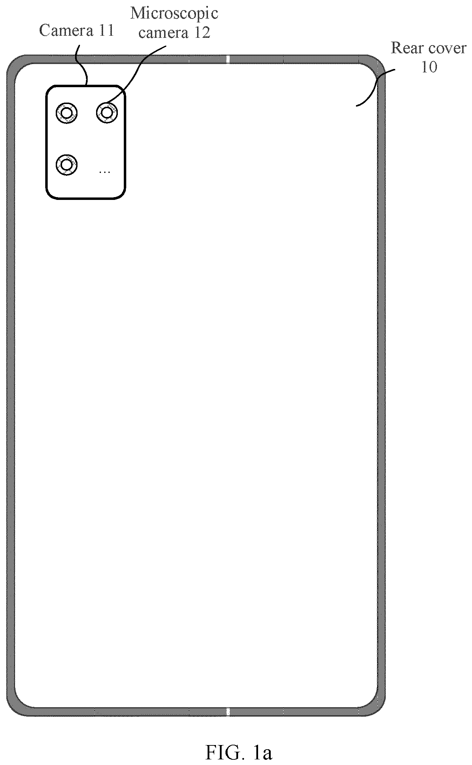

FIG. 1a is a schematic diagram of an example of a structure of an electronic device. As shown in FIG. 1a, one side of a rear cover 10 of the electronic device includes a camera 11.

There may be a plurality of cameras 11, which include at least a microscopic camera 12 (a currently common camera includes no microscopic camera), and may further include a currently common camera (which is a camera used for image shooting on the electronic device), for example, a medium-focus camera, a long-focus camera, a wide-angle camera, an ultra-wide-angle camera, a time of flight (TOF) depth-sensing camera, a movie camera, and/or a macro camera (the microscopic camera 12 is built-in in the electronic device, and belongs to the cameras 11 in this implementation). For different functional requirements, the electronic device may be equipped with dual cameras (two cameras), triple cameras (three cameras), quadruple cameras (four cameras), quintuple cameras (five cameras), even sextuple cameras (six cameras), or another combination of cameras, to improve image shooting performance. Generally, a magnification of the camera 11 ranges from 0.2 to 20. Basic parameters of the cameras are described by way of example. For example, the medium-focus camera has a focal length of 50 mm and an aperture of f/1.6, the long-focus camera has a focal length of 200 mm and an aperture of f/3.4, and the wide-angle camera has a focal length of 35 mm and an aperture of f/2.2.

The microscopic camera 12 has a specific magnification, and may be used to observe a bacterium. Generally, a maximum magnification of the microscopic camera 12 is more than 200.

In this embodiment of this application, the microscopic camera 12 is disposed in the electronic device as one of the plurality of cameras 11. The electronic device collects an image by using a camera that is not the microscopic camera 12 in the plurality of cameras 11, and may identify a scene in the image. In some embodiments, the scene may be understood as an object category (for example, food, a hand, or a dining table) in the collected image. The electronic device collects an image by using the microscopic camera 12, and may identify micro information in the image. The micro information includes a category and a quantity of bacteria. The microscopic camera 12 and another camera of the cameras 11 may work at the same time, and a user can conveniently observe distribution of microorganisms in a living scenario.

A position of the microscopic camera 12 is not limited in this embodiment of this application. The microscopic camera 12 may be disposed on a side of the rear cover of the electronic device, or may be disposed on a side of a display of the electronic device, or may be disposed on an opposite side of a display of the electronic device, or may be disposed on a side of a side screen of the electronic device.

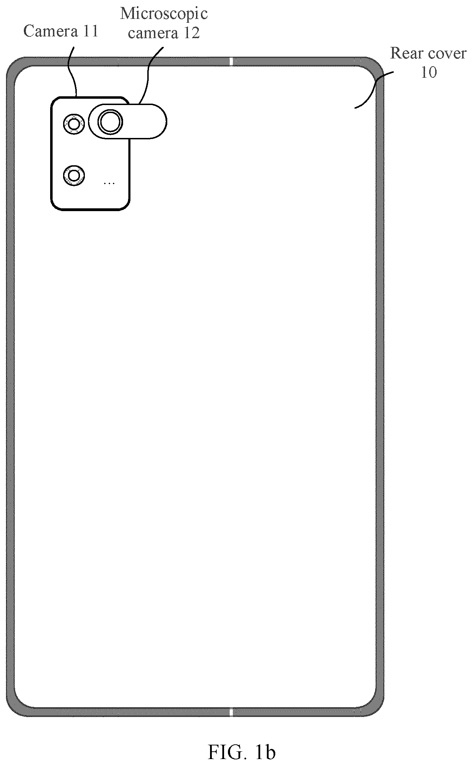

FIG. 1b is a schematic diagram of an example of a structure of another electronic device. As shown in FIG. 1b, one side of a rear cover 10 of the electronic device includes a camera 11, and a microscopic camera 12 is also installed on the rear cover (the microscopic camera 12 does not belong to the camera 11 in this implementation). There may be a plurality of cameras 11 (for example, a medium-focus camera, a long-focus camera, and a wide-angle camera). As an accessory of the electronic device, the microscopic camera 12 is installed on one of the plurality of cameras 11 (the microscopic camera 12 may be attached to a surface of the camera, to change content in an external field of view of the camera (that is, magnify a to-be-photographed object). Then the electronic device may obtain a micro image of a first object by using the camera. The camera may be referred to as a borrowed camera). The electronic device may identify the borrowed camera, and perform daily image shooting by using another available camera of the plurality of cameras 11 (micro image shooting performed by using the microscopic camera is different from current daily/conventional image shooting). The following describes, by way of example, a possible manner in which the electronic device identifies the borrowed camera.

Manner 1: After the microscopic camera 12 is installed on one of the cameras 11, the electronic device uses each of the cameras 11 to take an image, and determines, by comparing and analyzing the image obtained by each camera through image shooting, the camera on which the microscopic camera 12 is installed.

Manner 2: After the microscopic camera 12 is installed on one of the cameras 11, the electronic device receives information sent by application software corresponding to the microscopic camera 12, and determines the camera on which the microscopic camera 12 is installed.

Manner 3: After receiving a user operation of starting application software corresponding to the microscopic camera 12, the electronic device displays a first user interface. The first user interface includes a camera that supports installation of the microscopic camera 12 and that is of the cameras 11 of the electronic device. The first user interface may further include a camera recommended by the electronic device for a user to install the microscopic camera 12. The electronic device determines, based on a received user operation, a camera on which the microscopic camera 12 is installed.

For example, the cameras include only the long-focus camera and the wide-angle camera. When the microscopic camera is installed on the long-focus camera, the electronic device may invoke the wide-angle camera to collect an image, and identify a scene based on the image. When the microscopic camera is installed on the wide-angle camera, the electronic device invokes the long-focus camera to collect an image, and identifies a scene based on the image.

For example, the cameras include only the medium-focus camera, the long-focus camera, and the wide-angle camera. When the microscopic camera is installed on the medium-focus camera, the electronic device may invoke the wide-angle camera and/or the long-focus camera to collect an image, and identify a scene based on the image. When the microscopic camera is installed on the long-focus camera, the electronic device may invoke the medium-focus camera and/or the wide-angle camera to collect an image, and identify a scene based on the image.

In other words, when the microscopic camera 12 is installed on one of the plurality of cameras 11, the electronic device may invoke another camera of the cameras 11 to perform conventional image shooting, to identify a scene in a taken image.

In this embodiment of this application, the electronic device may be an electronic device, for example, a mobile phone, a tablet computer, a handheld computer, a wearable device, a virtual reality device, or a smart home device, or may be a function module installed on or running on the electronic device, or the like.

In this embodiment of this application, the microscopic camera 12 on the electronic device may be an external camera (that is, installed outside the electronic device). The external microscopic camera 12 (a possible product form is, for example, Tipscope. For an interaction manner between the external microscopic camera and the electronic device in some embodiments, refer to an interaction manner between Tipscope and a mobile phone) may include a miniature objective lens, and may further include another component. In a possible embodiment, the external microscopic camera 12 may be communicatively connected to the electronic device. A connection manner between the microscopic camera 12 and the electronic device is not limited to a wired manner or a wireless manner (for example, Bluetooth or Wi-Fi). An image collected by the microscopic camera 12 is sent to the electronic device, and the electronic device obtains the image, and obtains micro information in the image.

For ease of description, in the following embodiments, a camera that functions in a process of collecting a micro image may be referred to as a first camera, and a camera that functions in a process of collecting a macro image may be referred to as a second camera. For example, in FIG. 1a, the first camera is the microscopic camera 12, and the second camera is one or more cameras other than the microscopic camera 12 in the cameras 11. In FIG. 1b, the first camera may be understood as the microscopic camera 12 and/or the camera on which the microscopic camera 12 is installed in the cameras 11, and the second camera is one or more cameras on which the microscopic camera 12 is not installed in the cameras 11. The micro image may be referred to as a first image, and the macro image may be referred to as a second image.

In embodiments of this application, the electronic device collects the micro image by using the first camera (there may be one or more first cameras whose performance may be different from each other), and identifies micro information in the micro image. The electronic device collects the macro image by using the second camera (there may be one or more second cameras whose performance may be different from each other), and identifies a scene in the macro image.

In embodiments of this application, a user operation includes but is not limited to a touch operation, a voice operation, a gesture operation, and the like.

The following describes in detail, from an application interface, how the electronic device identifies the hygiene status of the object.

First, how to trigger the electronic device to obtain the micro information by using the first camera is described.

Manner 1: Start a camera application of the electronic device, and obtain the micro information by using the first camera.

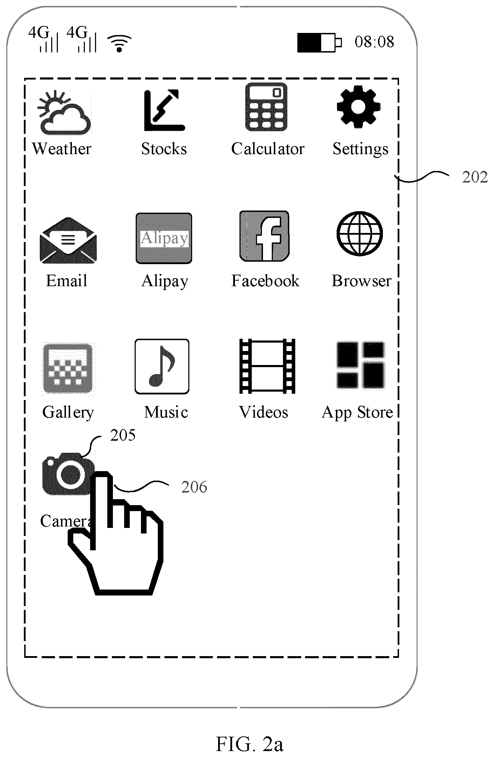

The camera application is application software that is used for image shooting and that the electronic device has. When the user wants to shoot an image or a video, the user starts the camera application, and the electronic device invokes each camera for image shooting. The first camera may be configured in the camera application, and the first camera is invoked by using the camera. A plurality of application icons are displayed on a display interface 202 in FIG. 2a. The display interface 202 includes an application icon of a camera 205. When detecting a user operation 206 performed on the application icon of the camera 205, the electronic device displays an application interface provided by the camera application.

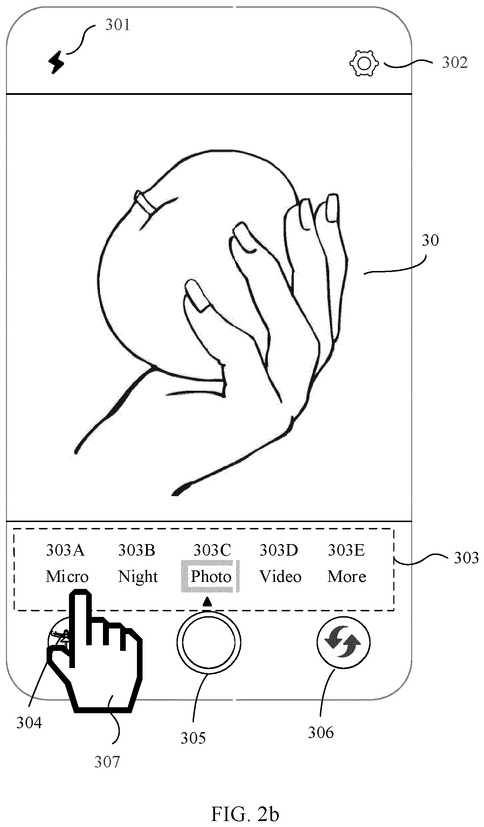

FIG. 2b shows a possible user interface provided by the camera application. The application interface of the camera 205 is shown in FIG. 2b. The application interface may include a display area 30, a flash icon 301, a setting icon 302, a mode selection area 303, a gallery icon 304, an OK icon 305, and a switching icon 306. If the user wants to obtain the micro information, the user may trigger, by using a user operation 307, an application icon of a micro mode 303A in the mode selection area 303.

A preview image of data collected by a camera currently used by the electronic device is displayed in the display area 30 in FIG. 2b. The camera currently used by the electronic device may be a default camera set in the camera application. To be specific, when the camera application is started, display content in the display area 30 is always a preview image of data collected by the second camera. The camera currently used by the electronic device may be alternatively a camera used when the camera application is closed last time.

The flash icon 301 may be used to indicate a working status of a flash. The flash icon 301 may be displayed in different forms when the flash is turned on or off. For example, when the flash is turned on, the flash icon is filled in white, or when the flash is turned off, the flash icon is filled in black. By using a touch operation for the flash icon 301, the user may control the flash to be turned on or off. Generally, the flash is also turned on when the micro image is collected by using the first camera, and a to-be-photographed object is illuminated by using the flash.

When detecting a user operation performed on the setting icon 302, the electronic device may display another shortcut function in response to the operation, for example, a function such as resolution adjustment, timer image shooting (which may also be referred to as time lapse image shooting, where a time point for enabling image shooting may be controlled), mute image shooting, audio control image shooting, or smile capture (when a camera detects a smile feature, the camera automatically focuses on a smile).

The mode selection area 303 is used to provide different image shooting modes. Based on different image shooting modes selected by the user, cameras enabled by the electronic device and image shooting parameters are also different. The mode selection area 303 may include the micro mode 303A, a night mode 303B, a photo mode 303C, a video mode 303D, and a "More" 303E. An icon of the photo mode 303C in FIG. 2b is marked, to prompt the user that a current mode is the photo mode.

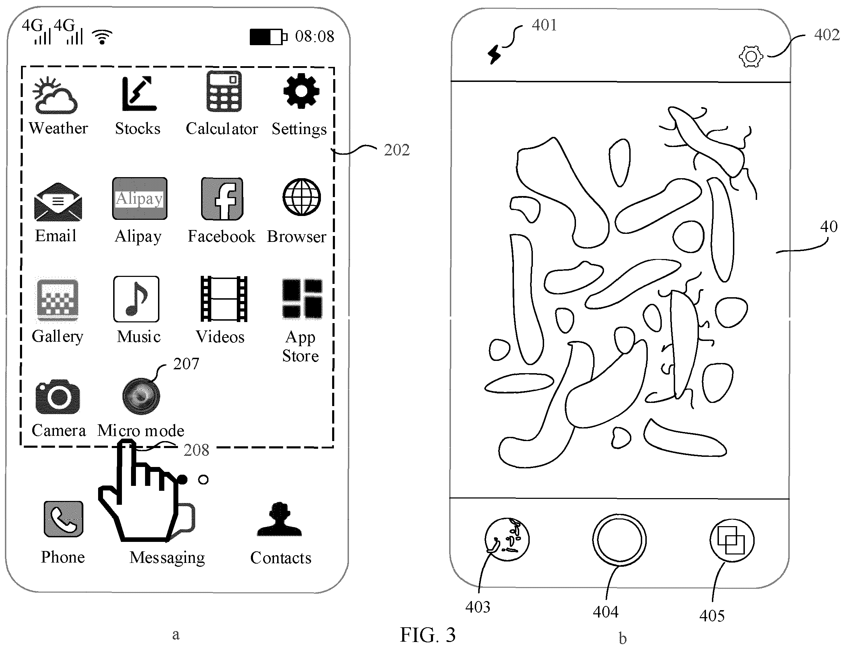

In the micro mode 303A, the user may observe a micro image of the object. When detecting a user operation performed on the micro mode 303A, the electronic device collects the micro image by using the first camera in response to the operation. In the mode selection area 303, the icon of the photo mode 303C is no longer marked, but the micro mode 303A is marked (as shown in FIG. 3, an icon 303A is marked in gray), to prompt the user that a current mode is the micro mode. In this case, the electronic device obtains the image collected by the first camera, and display content in the display area 30 is the image collected by the first camera. The electronic device obtains the micro information based on the image collected by the first camera, and the micro information includes a category and a quantity of bacteria.

In the night mode 303B, a detail presentation capability for a bright part and a dark part may be improved, noise may be controlled, and more image details may be presented. The photo mode 303C is applicable to most image shooting scenarios, and an image shooting parameter may be automatically adjusted based on a current environment. The video mode 303D is used to shoot a video. When detecting a user operation performed on the "More" 303E, the electronic device may display another selection mode in response to the operation, for example, a panorama mode (in which automatic stitching is implemented, and the electronic device stitches a plurality of continuously taken photos into one photo to achieve an effect of expanding an image angle of view), an HDR mode (in which three photos with underexposure, normal exposure, and overexposure are automatically and continuously taken, and best parts are selected and combined into one photo), or the like.

When a user operation performed on an application icon of any mode (for example, the micro mode 303A, the night mode 303B, the photo mode 303C, the video mode 303D, the panorama mode, or the HDR mode) in the mode selection area 303 is detected, in response to the operation, an image displayed in the display area 30 is a processed image in the current mode.

Each mode icon in the mode selection area 303 is not limited to a virtual icon, and may be alternatively implemented as a physical button.

When detecting a user operation performed on the gallery icon 304, the electronic device may access a gallery in response to the operation, and a taken photo and video are displayed in the gallery. The gallery icon 304 may be displayed in different forms. For example, after the electronic device stores an image currently collected by a camera, a thumbnail of the image is displayed in the gallery icon 304.

When detecting a user operation (for example, a touch operation, a voice operation, or a gesture operation) performed on the OK icon 305, in response to the operation, the electronic device obtains an image currently collected by a camera used in a current mode (or an image obtained after processing corresponding to a currently used mode is performed on a currently collected image), and stores the image in the gallery. The gallery may be accessed by using the gallery icon 304.

The switching icon 306 may be used to switch between a front-facing camera and a rear-facing camera. Both the front-facing camera and the rear-facing camera belong to the cameras 11. An image shooting direction of the front-facing camera is the same as a display direction of a screen of the electronic device used by the user, and an image shooting direction of the rear-facing camera is opposite to the display direction of the screen of the electronic device used by the user. If an image collected by the rear-facing camera is currently displayed in the display area 30, when a user operation performed on the switching icon 306 is detected, in response to the operation, an image collected by the front-facing camera is displayed in the display area 30. If an image collected by the front-facing camera is currently displayed in the display area 30, when a user operation performed on the switching icon 306 is detected, in response to the operation, an image collected by the rear-facing camera is displayed in the display area 30.

In FIG. 2b, the electronic device detects a user operation 307 performed on the micro mode 303A, and the electronic device collects the micro image by using the first camera in response to the user operation. In the mode selection area 303, the icon of the photo mode 303C is no longer marked, but the micro mode 303A is marked, to prompt the user that the current mode is the micro mode. In this case, the electronic device obtains the image collected by the first camera, and the display content in the display area 30 is the image collected by the first camera.

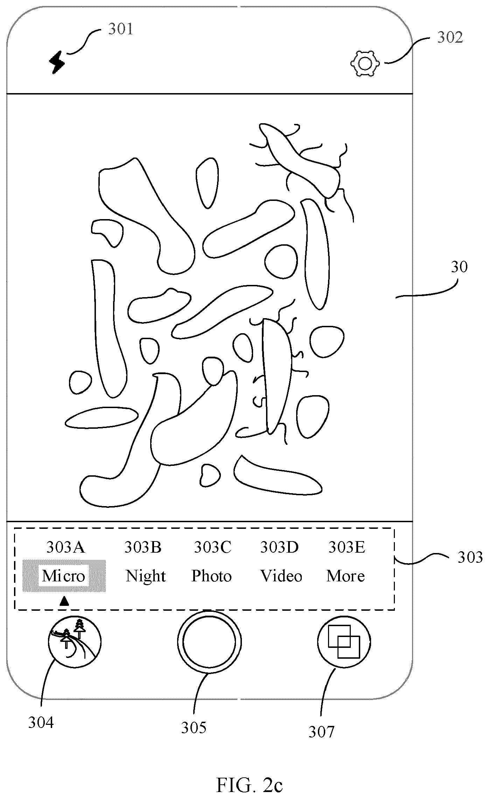

For example, FIG. 2c shows an example of an application interface of the micro mode 303A. The icon of the micro mode 303A in the mode selection area 303 is marked, to indicate that the current mode is the micro mode. The image collected by the first camera is displayed in the display area 30 in FIG. 2c, and the electronic device may obtain the micro information based on the image collected by the first camera.

It should be noted that, in an implementation, the electronic device refreshes/updates the switching icon 306 to a change icon 307 in response to a user operation performed on the micro mode 303A. The change icon 307 in FIG. 2c may be used for display change, in the display content of the display area 30, of the macro image collected by the second camera and the micro image collected by the first camera. If the image collected by the first camera is currently displayed in the display area 30, when a user operation performed on the change icon 307 is detected, in response to the operation, the image collected by the second camera is displayed in the display area 30. If the image collected by the second camera is currently displayed in the display area 30, when a user operation performed on the change icon 307 is detected, in response to the operation, the image collected by the first camera is displayed in the display area 30.

In some implementations, in the micro mode, the second camera and the first camera may collect the images at the same time. Regardless of whether the image collected by the second camera or collected by the first camera is displayed in the display area 30, the electronic device may obtain, based on the macro image collected by the second camera, scene information in the image (which may also be understood as obtaining the category of the object in the image), and obtain the micro information based on the micro image collected by the first camera.

In this application, the user operation 206 and the user operation 307 include but are not limited to user operations such as a tap, a shortcut button press, a gesture, a floating touch, and a voice instruction.

Manner 2: Start an application (for example, an application named a micro mode) that is dedicated to obtaining the micro image and that is on the electronic device, and collect the micro image by using the first camera.

The micro mode application may be an application dedicated to the microscopic camera, and may be downloaded from a network and installed on the electronic device. When the user wants to use the microscopic camera to shoot an image or a video, the user starts the micro mode application, and the electronic device invokes the first camera for image shooting. The "micro mode" is merely an example of a possible name, and may alternatively be another name. A plurality of application icons are displayed on a display interface 202 in the part a in FIG. 3. The display interface 202 includes an application icon of a micro mode 207. If the user wants to collect the micro image by using the first camera, the user triggers the application icon of the micro mode 207 by using a user operation 208. The electronic device displays an application interface of the micro mode 207 in response to the user operation 208.

The part b in FIG. 3 shows, by way of example, a possible application interface provided by a micro mode application. The application interface may include a display area 40, a flash icon 401, a setting icon 402, a gallery icon 403, an OK icon 404, and a change icon 405. An image collected by a camera currently used by the electronic device may be displayed in the display area 40.

When detecting a user operation performed on the gallery icon 403, in response to the operation, the electronic device may access a micro image gallery, and a shot micro photo and video are displayed in the micro image gallery. The gallery icon 403 may be displayed in different forms. For example, after the electronic device stores a micro image currently collected by the first camera, a thumbnail of the micro image is displayed in the gallery icon 403.

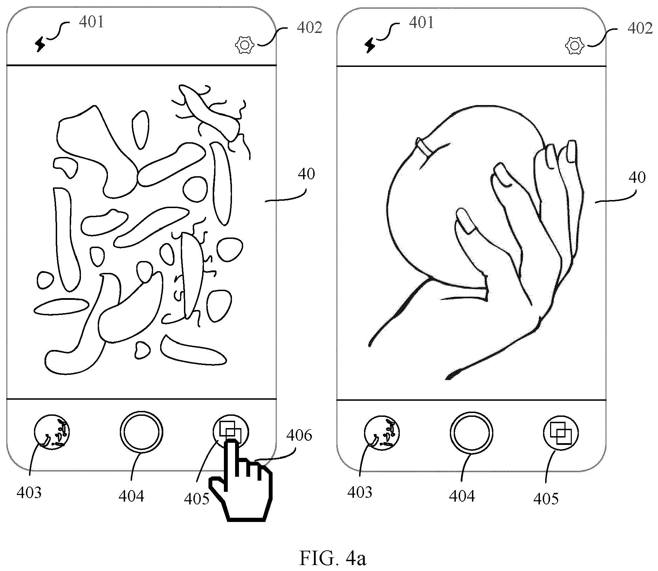

The change icon 405 may be used for display change, in display content in the display area 40, of the image collected by the second camera and the image collected by the first camera. As shown in FIG. 4a, if the image collected by the first camera is currently displayed in the display area 40, when a user operation 406 performed on the change icon 405 is detected, in response to the operation, the image collected by the second camera is displayed in the display area 40. If the image collected by the second camera is currently displayed in the display area 40, when a user operation performed on the change icon 405 is detected, in response to the operation, the image collected by the first camera is displayed in the display area 40.

For the flash icon 401, refer to the related descriptions of the flash icon 301 in FIG. 2b. For the setting icon 402, refer to the related descriptions of the setting icon 302 in FIG. 2b. For the OK icon 404, refer to the related descriptions of the OK icon 305 in FIG. 2b.

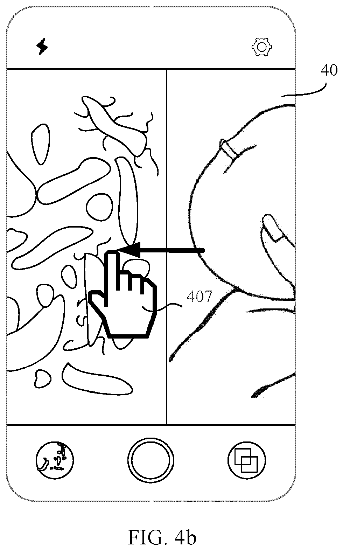

In an optional implementation, the display content in the display area 40 may be further changed in a sliding manner. For example, as shown in FIG. 4b, a user operation 407 is a leftward sliding operation, and is performed on the display area 40. The micro image (the image collected by the first camera) is initially displayed in the display area 40 of the electronic device. When the electronic device detects the operation 407 performed on the display area 40, the image collected by the second camera is gradually displayed in the display area 40 of the electronic device along with the operation 407, to achieve an effect of changing the display content in the display area 40. Similarly, if the image collected by the second camera is initially displayed in the display area 40 of the electronic device, the user may achieve the effect of changing the display content in the display area 40 by using a rightward sliding operation.

In a client that uses the micro mode 207, the second camera and the first camera may collect the images at the same time. Regardless of whether the image collected by the second camera or the first camera is displayed in the display area 40, the electronic device may obtain, based on the image collected by the second camera, a scene in the image, and obtain, based on the image collected by the first camera, the micro information in the image.

In this application, the user operation 208 includes but is not limited to user operations such as a tap, a shortcut button press, a gesture, a floating touch, and a voice instruction.

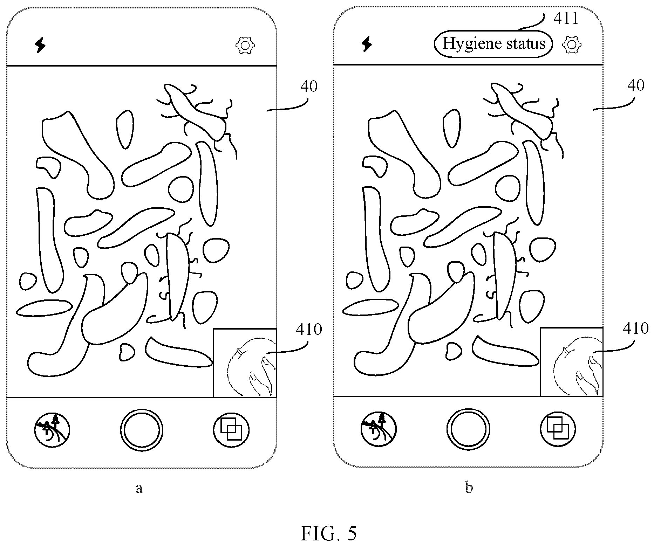

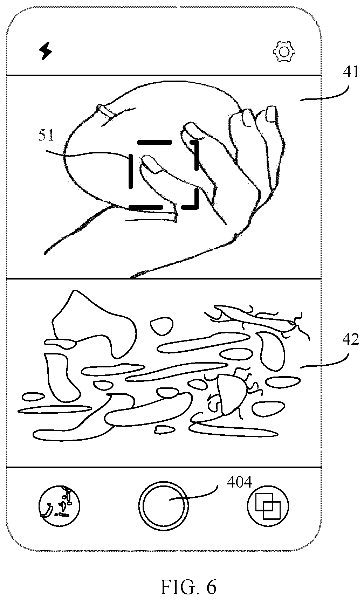

In the foregoing two manners, different paths for collecting the micro image by the electronic device by using the first camera and the corresponding display interfaces are described. Both FIG. 2c and the part b in FIG. 3 show examples of the application interfaces of the micro modes. FIG. 5 and FIG. 6 separately further provide a possible application interface of the micro mode.

As shown in a part a in FIG. 5, the image collected by the second camera may be displayed in a display area 410 in real time, and the image collected by the first camera may be displayed in a display area 40 in real time. The image in the display area 40 and the image in the display area 410 correspond to each other. In other words, display content in the display area 410 is a micro image of display content in the display area 40. When the user continuously changes an image shooting angle or a to-be-photographed object, the images collected by the second camera and the first camera also continuously change, and the display content in the display area 40 and the display content in the display area 410 also continuously change.

Compared with that in the part a in FIG. 5, an application interface in the micro mode in a part b in FIG. 5 may further include a control 411. The control 411 is used to trigger the electronic device to identify the micro information of the object (and further optionally, may be further used to trigger the electronic device to identify the scene information corresponding to the object, where the electronic device may be triggered, by using another operation of the user instead of being triggered by the user by using the control 411, to identify the scene information corresponding to the object), to determine the hygiene status of the object. In a possible implementation, when the electronic device detects a user operation (for example, the user taps and selects the control 411) for the control 411 for the first time, the electronic device obtains, based on the image collected by the second camera, the scene in the image, and obtains, based on the image collected by the first camera, the micro information of the object in the image. The electronic device determines the hygiene status of the object based on the scene and the micro information in the images, and the electronic device may output prompt information about the hygiene status of the object. In a possible implementation, when the electronic device detects a user operation (which may be that the user taps and deselects the control 411) for the control 411 for the second time, the electronic device may no longer identify the scene information and the micro information that correspond to the object, that is, no longer output the prompt information about the hygiene status of the object. In this case, the user may view the micro image and the macro image of the object on the application interface in the micro mode.

In a possible embodiment, the control 411 in the part b in FIG. 5 may be alternatively used to trigger the electronic device to collect the macro image by using the second camera (in this case, the display area 410 in which the macro image (which may be a thumbnail of the macro image) is displayed in the part b in FIG. 5 may not appear initially, but appears after the user operates the control 411). For example, when the electronic device detects a user operation for the control 411 for the first time, the electronic device may display, in the display area 410 in real time, the image (which may be a thumbnail) collected by the second camera. The electronic device obtains, based on the image collected by the second camera, the scene in the image, and obtains, based on the image collected by the first camera, the micro information in the image, to determine the hygiene status of the object. The electronic device may output the prompt information about the hygiene status of the object. When the electronic device detects a user operation for the control 411 for the second time, the electronic device does not need to obtain the macro image again, and the display area 410 may be hidden, or a black screen is displayed. The electronic device no longer identifies the scene information and the micro information that correspond to the object, that is, no longer outputs the prompt information about the hygiene status of the object.

In a possible embodiment, the display content in the display area 40 and the display content in the display area 410 may be mutually switched based on a user operation. For example, the image collected by the second camera is displayed in the display area 410, and the image collected by the first camera is displayed in the display area 40. When the electronic device detects a tap operation for the display area 410, the display content in the display area 40 and the display content in the display area 410 are mutually switched. In other words, the image collected by the second camera is displayed in the display area 40, and the image collected by the first camera is displayed in the display area 410. The user operation is not limited to the tap operation for the display area 410, and may be alternatively a tap operation for the change icon 405, and may be alternatively a drag operation, a double-tap operation, a gesture operation, or the like for the display area 410 or the display area 40.

In some embodiments of this application, a size of the display area 410 may be different from that in FIG. 5. For example, an area covered by the display area 410 may be greater than or less than an area covered by the display area 410 in FIG. 5.

In some optional embodiments, a shape, a position, and the size of the display area 410 may be set by a system by default. For example, as shown in FIG. 5, the system may set the display area 410 as a vertical rectangular interface in a lower right area of the display 5 by default.

In some optional embodiments, a shape, a position, and the size of the display area 410 may be alternatively determined in real time based on a user operation. The size and the position of the display area 410 may be related to positions at which two fingers of the user stop sliding on the display. For example, when there is a larger distance between the positions at which the two fingers of the user stop sliding on the display, the display area 410 is larger. For another example, an area in which the display area 410 is located may cover tracks along with the two fingers of the user slide.

A display area 41 and a display area 42 are included in FIG. 6. The display area 41 and the display area 42 are separately displayed on the display of the electronic device in a screen-split manner. The image collected by the second camera may be displayed in the display area 41 in real time, and the image collected by the first camera may be displayed in the display area 42 in real time. The image in the display area 41 and the image in the display area 42 correspond to each other. In other words, display content in the display area 42 is a micro display image in the display area 41. When the user continuously changes an image shooting angle or a to-be-photographed object, the images collected by the second camera and the first camera also continuously change, and display content in the display area 40 and the display content in display area 410 also continuously change.

A position box 51 is also included in FIG. 6, and the display content in the display area 42 is a micro image in the position box 51. As the image in the position box 51 varies, the display content in the display area 42 also changes accordingly.

In some optional embodiments, a size of the display area 41 and a size of the display area 42 may be determined in real time based on a user operation. For example, a screen split line between the display area 41 and the display area 42 is dragged upward or downward. When the user drags the screen split line upward, a length of the display area 41 becomes smaller, and a length of the display area 42 becomes larger. When the user drags the screen split line downward, a length of the display area 41 becomes larger, and a length of the display area 42 becomes smaller. Optionally, the display content in the display area 40 and the display content in the display area 410 may be mutually switched based on a user operation.

The foregoing embodiment provides the possible application interface in the micro mode. In response to the user operation 307, the electronic device collects the micro image by using the first camera, and displays the application interface (as shown in FIG. 2c) in the micro mode 303A. Alternatively, in response to the user operation 208, the electronic device collects the micro image by using the first camera, and displays the application interface (as shown in the part b in FIG. 3) in the micro mode 207, or displays the application interface in FIG. 5 or FIG. 6, or the like. On the foregoing application interface, the electronic device may obtain the micro information of the first object by using the first camera, and then infer the hygiene status of the first object with reference to the category of the first object.

The following describes how the electronic device determines the category of the first object.

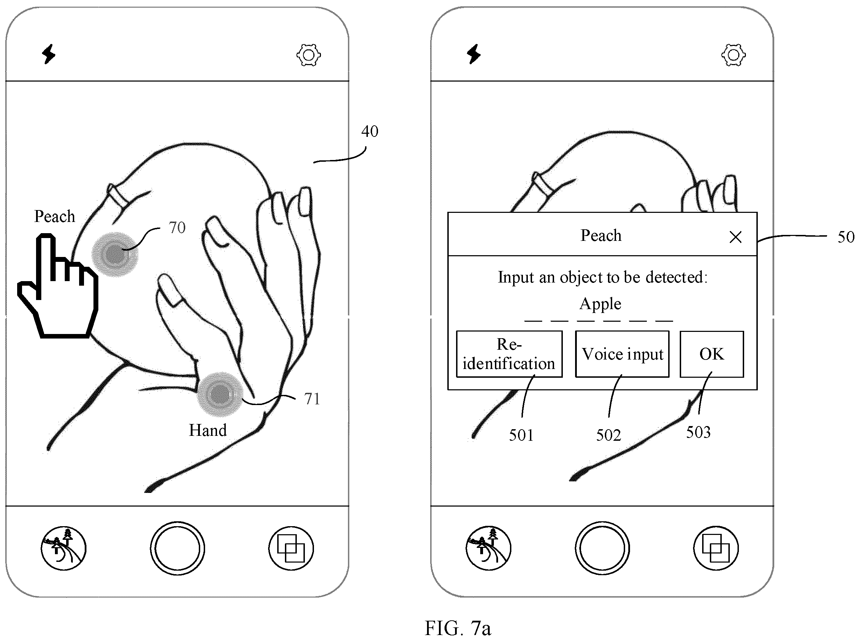

The electronic device collects the image of the first object by using the second camera, and automatically detects the category of the first object in the collected image. As shown in the left accompanying drawing in FIG. 7a, the image collected by the second camera is displayed in a display area 40 in the left accompanying drawing in FIG. 7a. A cursor 70 and a cursor 71 respectively indicate objects (a peach and a hand) in an image that are detected by the electronic device. The cursor 70 is displayed in a display area of the peach, and the cursor 71 is displayed in a display area of the hand. A quantity of cursors depends on a quantity of objects detected by the electronic device in the image, and a description of an identified object category is displayed near the cursor. Text content displayed near the cursor 70 is the "Peach", and text content displayed near the cursor 71 is the "hand", to prompt the user to learn of the objects and object categories that are included in the image and that are detected by the electronic device. Actually, the object indicated by the cursor 70 is not the peach, but an apple. In this case, the user may perform a tap operation on the display area in which the "Peach" is displayed.

When detecting a user operation performed on a display area of text content that describes an object, the electronic device displays an input window on an application interface, to prompt the user to input an object to be detected, so as to achieve a functional effect of correcting the object category identified by the electronic device. For example, when detecting a user tap operation performed on the display area of the text content "Peach", as shown in the right accompanying drawing in FIG. 7a, the electronic device displays an input window 50 on the application interface, to prompt the user to input the object to be detected. The user may input a category of the object in the input window 50. For example, the image collected by the second camera is an apple. If the electronic device identifies that an object category in the image is a peach, the user may tap a display area whose text content is the "Peach", and enter the category of the object as the apple in the input window 50. The electronic device receives a text entered by the user, and corrects the object category in the image to the apple. In this case, the text content displayed near the cursor 70 is the "Apple".

As shown in the right accompanying drawing in FIG. 7a, the input window 50 may further include function icons such as "Re-identification" 501, "Voice input" 502, and "OK" 503.

The "Re-identification" 501: When detecting a user operation performed on the "Re-identification" 501, in response to the operation, the electronic device re-identifies the category of the object in the display area 40, and when an identification result is different from a previous identification result, displays the identification result near the cursor of the object in the image, to prompt the user to learn of the object and the object category that are included in the image and that are detected by the electronic device.

The "Voice input" 502: When detecting a user operation performed on the "Voice input" 502, in response to the operation, the electronic device obtains audio input by the user, and recognizes content of the audio, and an object described in the audio is used as the category of the first object.

The "OK" 503: When detecting a user operation performed on the "OK" 503, in response to the operation, the electronic device stores the text entered by the user in the manual input window 50, and the text is used as the category of the first object.

In this embodiment of this application, the input window 50 provides a manner of assisting the electronic device in determining the category of the first object. When the object that the user wants to detect does not match the object category identified by the electronic device, correction can be performed in a manner of tapping the display area of the text content of the object. This improves accuracy of detecting a hygiene status of an object.

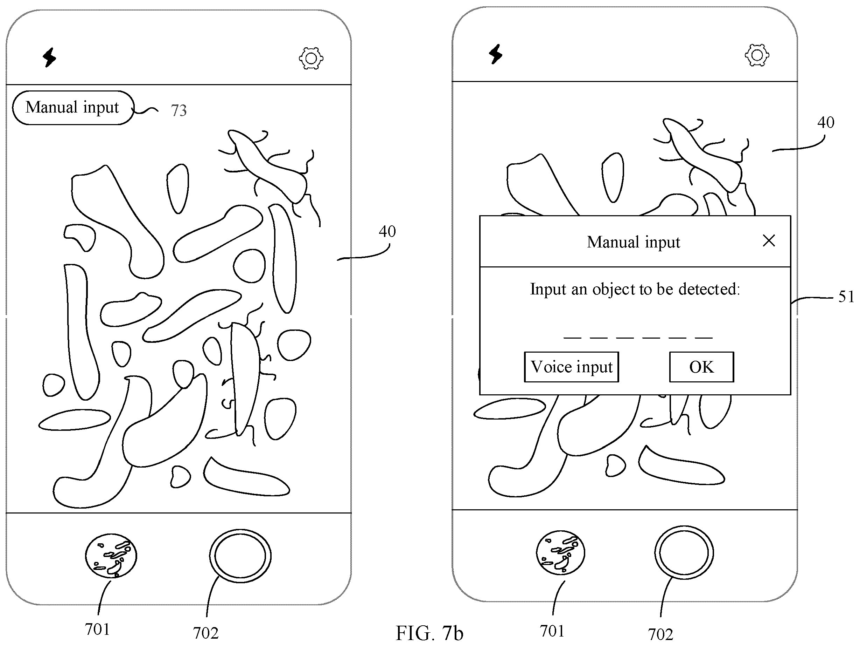

In some possible embodiments, this application further provides a manner of determining the category of the first object. To be specific, the electronic device does not need to identify the scene in the image collected by the second camera, but directly determines, by using text information, voice information, or the like that is input by the user, the category of the first object that needs to be detected. As shown in the left accompanying drawing in FIG. 7b, the image collected by the first camera is displayed in a display area 40 in the left accompanying drawing in FIG. 7b. The application interface may further include a manual input icon 73, a gallery icon 701, and an OK icon 702. For the gallery icon 701, refer to the related descriptions of the gallery icon 403 in FIG. 3. For the OK icon 702, refer to the related descriptions of the OK icon 404 in FIG. 3.

The manual input icon 73 is used to input the category of the first object. As shown in the right accompanying drawing in FIG. 7b, in response to a user operation for the manual input icon 73, the electronic device displays an input window 51 on the application interface, to prompt the user to input an object to be detected. The user may input a category of the object in the input window 51. For example, if entered text content received by the electronic device is "Apple", the electronic device determines that the category of the first object is the apple.

For the voice input icon and the OK icon in the right accompanying drawing in FIG. 7b, refer to the related descriptions of the "Voice input" 502 and the "OK" 503 in FIG. 7a.

In this implementation, the electronic device does not need to collect the macro image by using the second camera, and does not need to identify the scene in the collected image. Instead, the electronic device directly determines, by using the text information, the voice information, or the like that is input by the user, the category of the first object that needs to be detected. This saves a resource of the electronic device, and improves efficiency.

The foregoing embodiment provides a manner in which the electronic device determines the category of the first object, including determining the category of the first object in a manner of detecting the image collecting by the second camera or receiving the user operation. This application provides the method for identifying the hygiene status of the object. The electronic device may obtain the micro information of the first object by using the first camera, and infer the hygiene status of the first object with reference to the category of the first object, to output prompt information of the hygiene status of the first object.

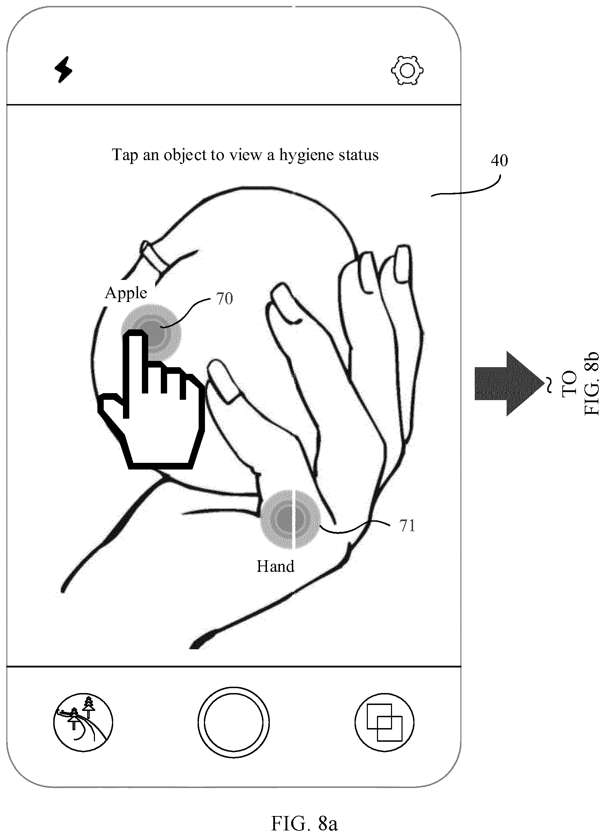

For example, in FIG. 8a, when the user taps a cursor 70 for an apple, the electronic device performs analysis and calculation with reference to the apple and micro information of the apple, to obtain a hygiene status of the apple, and outputs prompt information.

Optionally, the electronic device obtains the hygiene status of the first object after determining the category of the first object and the micro information of the first object, and outputs the prompt information after receiving an instruction for obtaining the hygiene status of the first object. For example, in FIG. 8a, when the user taps the cursor 70 for the apple, the electronic device outputs the prompt information.

In this embodiment of this application, the prompt information may be used to notify the user of the hygiene status of the first object. In some embodiments, the prompt information may be further used to prompt the user how to improve the hygiene status of the object. In some embodiments, the prompt information may be further used to prompt the user how to process the object. A manner in which the electronic device provides a prompt is not limited to a text, a voice, vibration, an indicator, or the like.

The following describes how the electronic device outputs the prompt information of the hygiene status of the first object.

In some embodiments of this application, after determining the hygiene status of the first object, the electronic device may output the prompt information in response to a received user operation. The user may choose to view a hygiene status of an object that the user wants to know. FIG. 8a to FIG. 8d show, by way of example, a manner in which the electronic device outputs the prompt information after receiving the user operation.

As shown in FIG. 8a to FIG. 8d, an image collected by the second camera is displayed in a display area 40 in FIG. 8a, and a cursor 70 and a cursor 71 respectively indicate objects (the apple and a hand) in the image that are detected by the electronic device. The cursor 70 is displayed in a display area of the apple, and the cursor 71 is displayed in a display area of the hand.

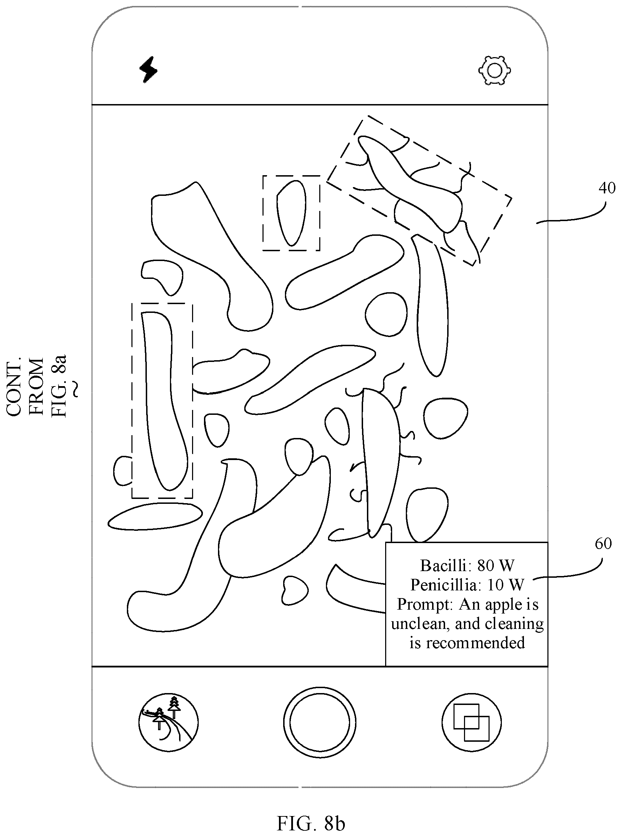

The electronic device outputs a prompt (namely, "Tap an object to view a hygiene status") in the display area 40, to prompt the user that the user may tap the object to view the hygiene status of the object. Specifically, as shown in FIG. 8b, if the user wants to view the hygiene status of the apple, the user may tap the cursor 70. In response to the tap operation, the electronic device displays, in the display area 40 in FIG. 8b, an image collected by the first camera, and the display area 40 further includes a prompt box 60. Prompt content in the prompt box 60 includes categories and quantities of bacteria (800,000 bacilli and 100,000 penicillia), and the hygiene status of the object (which is that the apple is unclean, and cleaning is recommended).

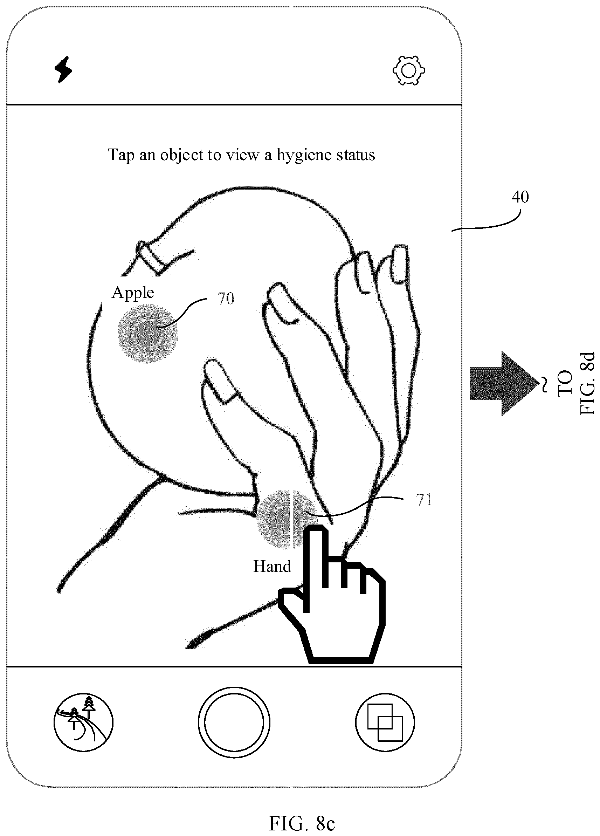

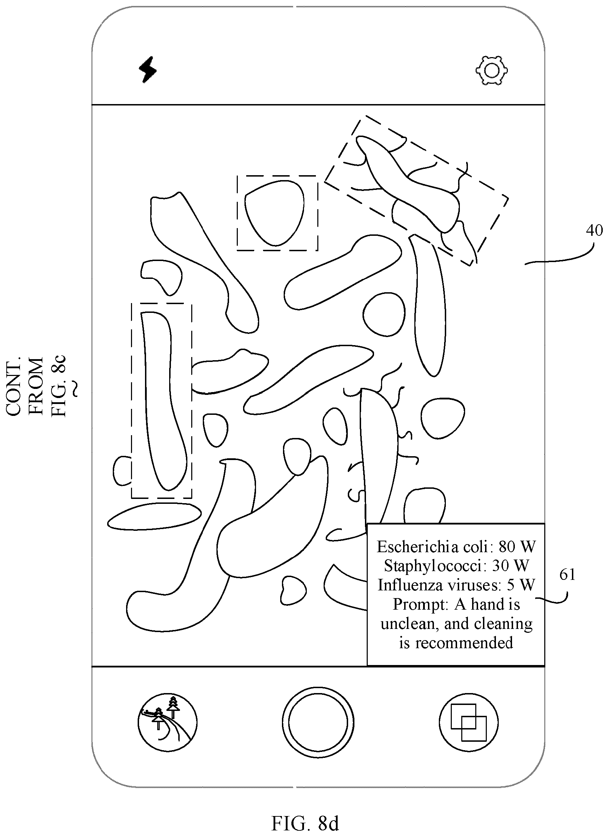

Still as shown in FIG. 8c, if the user wants to view a hygiene status of the hand, the user may tap the cursor 71. In response to the tap operation, the electronic device displays, in the display area 40 in FIG. 8d, the image collected by the first camera, and the display area 40 further includes a prompt box 61. Prompt content in the prompt box 61 includes categories and quantities of bacteria (800,000 Escherichia coli, 300,000 staphylococci, and 50,000 influenza viruses), and a hygiene status of the object (which is that the hand is unclean, and cleaning is recommended).

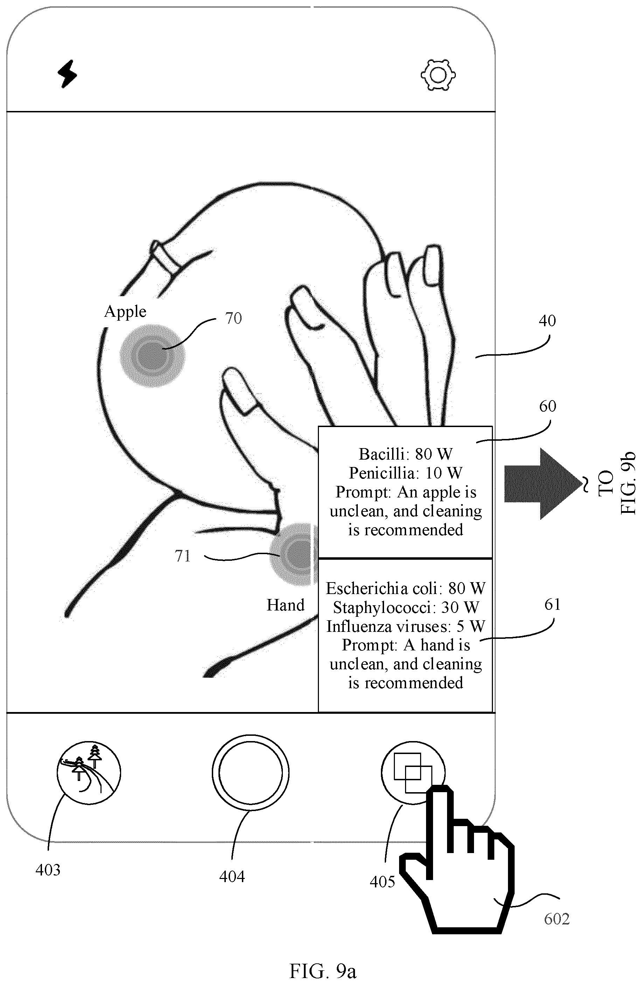

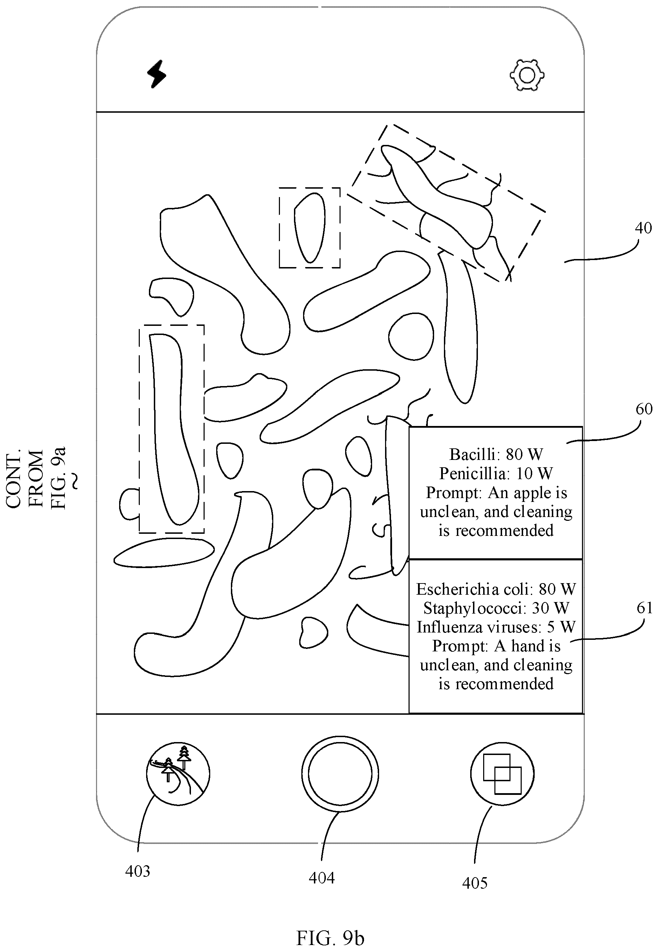

In some other embodiments of this application, after determining the hygiene status of the first object, the electronic device directly outputs the prompt information. The user can learn about the hygiene status of the object as soon as possible. FIG. 9a and FIG. 9b show, by way of example, a manner in which the electronic device directly outputs the prompt information.

As shown in FIG. 9a and FIG. 9b, an image collected by the second camera is displayed in a display area 40 in FIG. 9a, and a cursor 70 and a cursor 71 respectively indicate objects (an apple and a hand) in the image that are detected by the electronic device. The cursor 70 is displayed in a display area of the apple, and the cursor 71 is displayed in a display area of the hand.

FIG. 9a further includes a prompt area 60 and a prompt area 61. The prompt area 60 and the prompt area 61 respectively describe hygiene statuses of the apple and the hand. Prompt information output from the prompt area 61 is "The apple is unclean, cleaning is recommended", and prompt information output from the prompt area 62 is "The hand is unclean, and cleaning is recommended". A quantity of prompt areas depends on a quantity of hygiene statuses of objects in the image that are detected by the electronic device. If the electronic device detects hygiene statuses of two objects, two prompt areas are output, if the electronic device detects hygiene statuses of three objects, three prompt areas are output, and so on.

When the electronic device detects a user operation 602 for a change icon 405, in response to the user operation 602, an image collected by the first camera is displayed in the display area 40 in FIG. 9b. FIG. 9b further includes the prompt area 60 and the prompt area 61. Details are not described herein again.

In this embodiment of this application, a manner of outputting the prompt information is not limited. The manner may be a manner of outputting a text (for example, a manner of displaying the prompt area 60 in FIG. 8a to FIG.8d or FIG. 9a and FIG. 9b), may be a manner, for example, an image, a voice, vibration, or an indicator, or may be indicating a hygiene status by using a display color of a cursor or a text. For example, FIG. 9a includes the cursor 70 indicating the apple and the cursor 71 indicating the hand. If the electronic device detects that the apple is unhygienic, the cursor 70 for the apple is displayed in red. If the electronic device detects that the hand is hygienic, the cursor 71 for the hand is displayed in green. In this manner, by using different colors of the cursors, the user can learn the hygiene status of the object in advance, and more intuitively find an unhygienic object among a plurality of objects. Then, the user specifically views the unhygienic object, and performs hygienic processing on the unhygienic object.

In this embodiment of this application, output content of the prompt information is not limited. The output content of the prompt information may include a description of the hygiene status of the object (for example, the object is unhygienic, the object is unclean, or a hygienic degree of the object is low), may also include a suggestion for improving the hygiene status of the object (for example, cleaning is recommended, wiping is recommended, or heating is recommended), and a suggestion for a manner of processing the object (for example, discarding is recommended), may further include a description of impact of a bacterial category on the hygiene status (for example, food is unhygienic due to a larger quantity of Escherichia coli, and heating at a high temperature of 100 degrees centigrade for sterilization is recommended), and may further include a freshness degree of the object (for example, the apple is not fresh, a banana is rotted), and the like.

In some embodiments of this application, a size of the prompt area 60 or the prompt area 61 may be different from that in FIG. 8a to FIG. 8d or FIG. 9a and FIG. 9b. For example, an area covered by the prompt area 60 or the prompt area 61 may be greater than or less than an area covered by the prompt area 60 or the prompt area 61 in the prompt area 60 or the prompt area 61.

In some optional embodiments, a shape, a position, and the size of the prompt area 60 or the prompt area 61 may be set by a system by default, or may be determined in real time based on a user operation. The size and the position of the prompt area 60 or the prompt area 61 may be related to positions at which the two fingers of the user stop sliding on the display. For example, when there is a larger distance between the positions at which the two fingers of the user stop sliding on the display, the prompt area 60 or the prompt area 61 is larger. For another example, an area in which the prompt area 60 or the prompt area 61 is located may cover tracks along with the two fingers of the user slide.

The foregoing embodiment provides a related manner in which the electronic device outputs the prompt information of the hygiene status of the first object, including the output content of the prompt information and a form of outputting the prompt information.

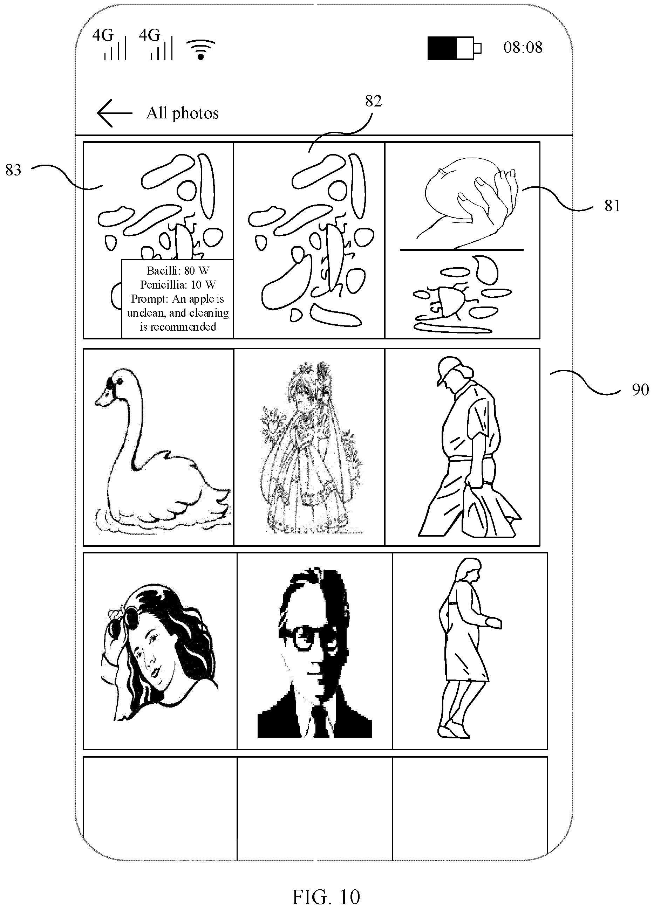

In this embodiment of this application, after entering the micro mode, the electronic device may store, on any application interface in response to a user operation received on an image shooting control, display content in a display area on the application interface. The user may view the micro image and prompt information of the object by using the gallery. The image shooting control may be, for example, the OK icon 404 or the OK icon 305. As shown in FIG. 10, an image 81, an image 82, and an image 83 are displayed in a display area 90 by way of example. The image 81 is the display content in the display area in FIG. 6. The electronic device detects a user operation for the OK icon 404 in FIG. 6, obtains the display content in the display area in FIG. 6, and stores the display content in the gallery. The image 82 is the display content in the display area 40 in the part b in FIG. 3. The electronic device detects a user operation for the OK icon 404 in the part b in FIG. 3, obtains the display content in the display area 40 in the part b in FIG. 3, and stores the display content in the gallery. The image 83 is display content (which includes the prompt area 60) in the display area 40 in FIG. 8b. The electronic device detects a user operation for the OK icon in FIG. 8b, obtains the display content in the display area 40 in FIG. 8b, and stores the display content in the gallery.

An application interface shown in FIG. 10 may be accessed by using the gallery icon 403.

In this application, the electronic device collects the image of the object by using the second camera, and identifies the scene in the image. The scene is the object category (for example, the food, the hand, or the dining table) in the collected image. The electronic device collects the image of the same object by using the first camera, and identifies the micro information in the image. The micro information includes the category and the quantity of bacteria.

Comprehensive analysis is performed with reference to the scene information and the micro information, to determine the hygiene status of the scene, and provide the intelligent prompt. For example, when the category of the first object in the scene information is the food, the bacterium included in the micro information includes a yeast, an actinomycete, an edible fungus, or the like. An intelligent prompt provided by the electronic device for the food includes "the food is unhygienic, and cleaning is recommended", and further includes "heating the food at a high temperature is recommended", "discarding the food is recommended", or the like. When the category of the first object is the hand, a bacterium existing on the first object may be a staphylococcus, Escherichia coli, an influenza virus, or the like. An intelligent prompt provided by the electronic device for the hand includes "the hand is unhygienic, and cleaning is recommended", and further includes "the hand is unhygienic, and cleaning with a hand sanitizer is recommended" and the like. When the category of the first object is air, a bacterium existing on the first object may be Neisseria meningitidis, a tubercle bacillus, a hemolytic streptococcus, corynebacterium diphtheriae, bordetella pertussis, or the like. An intelligent prompt provided by the electronic device for the air includes "air quality is poor, and wearing a mask is recommended", and further includes "air quality is poor, wearing a medical mask is recommended" and the like.

The following describes a technical principle related to this solution.

### (1) Image place scene category identification (Places CNN)

Image place scene category identification is an image classification technology, and is a manner of determining, from an image, a type of a place in which an image scene is located. An existing mature network framework (for example, ResNet) may be used to implement high-precision image and place identification. The scene and an object in the image are detected, and the detected scene and an object name as well as corresponding confidence (accuracy) are returned. Places365 is an open-source dataset used for scene classification, including Places365-standard and Places365-challenge. A training set of Places365-standard has 365 scene categories, each of which has a maximum of 5,000 images. A training set of Places365-challenge has 620 scene categories, each of which has a maximum of 40,000 images. An image place scene category identification model is trained by using Places365. A convolutional neural network trained on a Places365 database may be used for scene identification as well as a general deep scene feature for visual identification.

In this application, after obtaining the second image, the electronic device can determine a type of the image scene from the second image by using an image place scene category identification technology.

### (2) Deep learning-based object detection algorithm (YOLOv3)

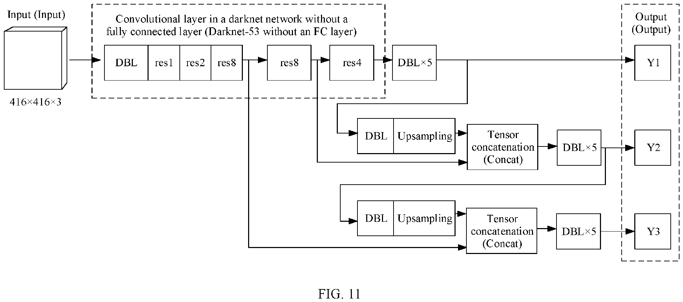

Object detection is to find all objects of interest in an image and determine positions and sizes of the objects. An identification process includes classification (classification), location (location), detection (detection), and segmentation (segmentation). FIG. 11 shows a network structure of YOLOv3. The network structure of the YOLOv3 specifically includes:
a darknet-53 without an FC layer, where 53 indicates a quantity of convolutional layers and fully connected layers in a darknet network, and the darknet-53 without an FC layer indicates 52 layers before darknet-53, without the fully connected layer;
an input layer, where 416×416×3 indicates that pixels of an input image are 416×416 and a quantity of channels is 3;
DBL, namely, Darknetconv2d_BN_Leaky, which is a basic component of yolo_v3, is convolution+BN+a leaky ReLU, and is used to perform feature extraction on the image;
resn, where n indicates a digit, for example, res1, res2, ..., or res8, indicating a quantity of res_units included in the res_block, and generally, an input and an output of the resn are consistent, and no other operation is performed, but only a difference is calculated;
concat, which is tensor concatenation, namely, concatenating upsampling of a darknet middle layer and a subsequent layer, where the concatenation operation is different from an adding operation at a residual layer, and concatenation expands a tensor dimension, but adding is merely direct addition without changing the tensor dimension; and
an output layer, including three prediction paths, where depths of y1, y2, and y3 are 255, and a side length rule is 13:26:52, in YOLOv3, it is set that each grid cell predicts three boxes, and therefore, each box needs to have five basic parameters (x, y, w, h, and confidence), and then has a probability of 80 categories, that is, 3×(5+80)=255.

The following further describes the foregoing YOLOv3 network by using an example in which 416×416×3 is an input image.

At a Y1 layer, a feature map (feature map) with a size of 13×13 and 1,024 channels in total is input. After a series of convolution operations, the size of the feature map remains unchanged, but the quantity of the channels is reduced to 75. Finally, a feature map with a size of 13×13 and 75 channels is output. Based on the feature map with the size of 13×13 and the 75 channels, classification and position regression are performed.

At a Y2 layer, a convolution operation is performed on a feature map with a size of 13×13 and 512 channels at a layer 79 to generate a feature map with a size of 13×13 and 256 channels. Then, upsampling is performed to generate a feature map with a size of 26×26 and 256 channels. In addition, the feature map with the size of 26×26 and the 256 channels is combined with a mesoscale feature map with a size of 26×26 and 512 channels at a layer 61. Then, a series of convolution operations are performed. The size of the feature map remains unchanged, but the quantity of the channels is reduced to 75. Finally, a feature map with a size of 26×26 and 75 channels is output. Based on the feature map with the size of 26×26 and the 75 channels, classification and position regression are performed.

At a Y3 layer, a convolution operation is performed on a feature map with a size of 26×26 and 256 channels at a layer 91 to generate a feature map with a size of 26×26 and 128 channels. Then, upsampling is performed to generate a feature map with a size of 52×52 and 128 channels. In addition, the feature map with the size of 52×52 and the 128 channels is combined with a mesoscale feature map with a size of 52×52 and 256 channels at a layer 36. Then, a series of convolution operations are performed. The size of the feature map remains unchanged, but the quantity of the channels is reduced to 75. Finally, a feature map with a size of 52×52 and 75 channels is output. Based on the feature map with the size of 52×52 and the 75 channels, classification and position regression are performed.

In conclusion, target detection at three different scales is completed.

In this application, a deep learning-based target detection technology is used to perform scene identification by using the camera, and perform microorganism identification by using the microscopic camera. An identification process of the microscopic camera is consistent with an identification process of the camera. The identification process mainly includes the following steps. 1. Information obtaining. To be specific, optical information is converted into electrical information by using an image shooting camera sensor. To be specific, basic information of an object photographed by a terminal is obtained, and the basic information is converted, by using a method, into information that can be recognized by a machine. 2. Preprocessing. Operations such as denoising, smoothing, and transformation are performed on a taken image, to enhance an important feature of an obtained image. 3. Feature extraction and selection. Feature extraction and selection are performed on the preprocessed image, and a useful feature is identified and extracted by using an inherent feature that the image has. 4. Classifier design, namely, an identification rule obtained through training. A feature classification manner is obtained by using the identification rule. 5. Classification decision. A to-be-identified object is classified in feature space, to identify a specific category of the to-be-identified object in an image shooting scenario.

### (3) Knowledge graph

The knowledge graph may be understood as a mesh knowledge base formed by linking entities with an attribute by using a relationship, and includes nodes and a connection line. The nodes are the entities, and the connection line is an association rule. Knowledge graph connects various kinds of trivial and scattered objective knowledge to each other, to support comprehensive knowledge retrieval, decision-making assistance, and intelligent inference.

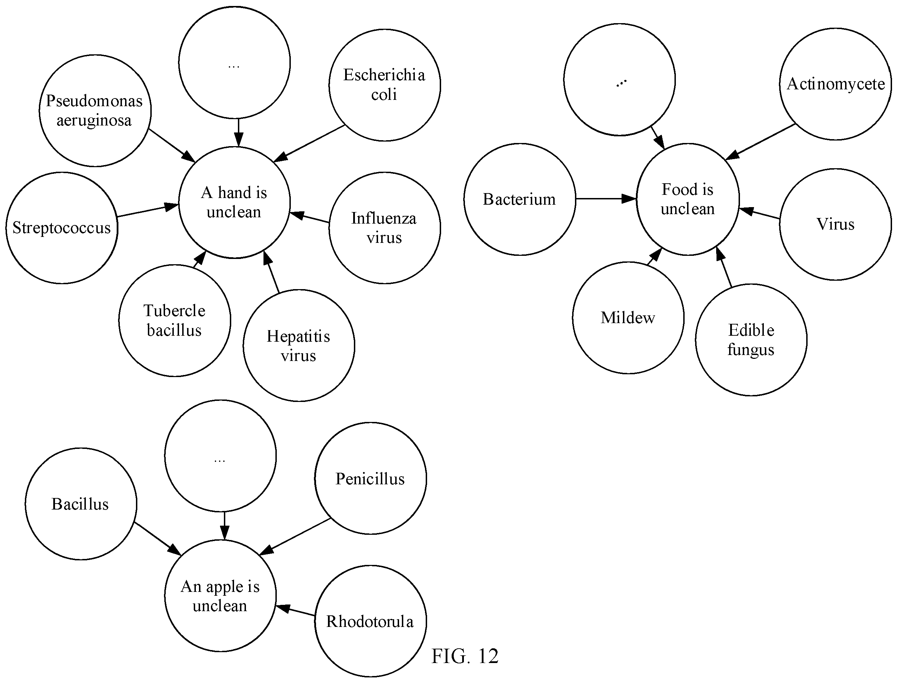

In this application, macro information and the micro information are associated in a form of the knowledge graph, so that a user using this function can quickly learn a situation of a bacterium around a macro object in a timely manner, and improve self-protection awareness with reference to a suggestion provided by intelligent inference. In addition, practicability of the electronic device is also improved. After obtaining the category of the first object, the electronic device obtains a knowledge graph of the category of the first object from the knowledge graph. For example, FIG. 12 shows knowledge graphs in which three nodes, namely, "A hand is unclean", "Food is unclean", and "An apple is unclean", are respectively used as a central node. It can be learned from FIG. 12 that bacteria that may cause the apple to be unclean include bacteria such as a bacillus, rhodotorula, and a penicillus. A connection line represents an association rule. The association rule may be that, when a bacterium exists, it indicates that the food is unclean, or the association rule may be that, when a quantity of bacteria exceeds a threshold, it indicates that the food is unclean, or the like. When obtaining that the category of the first object is an apple, with reference to a category and a quantity of microorganisms detected by the electronic device, the electronic device may determine a hygiene status of the apple by using the knowledge graph of the apple.

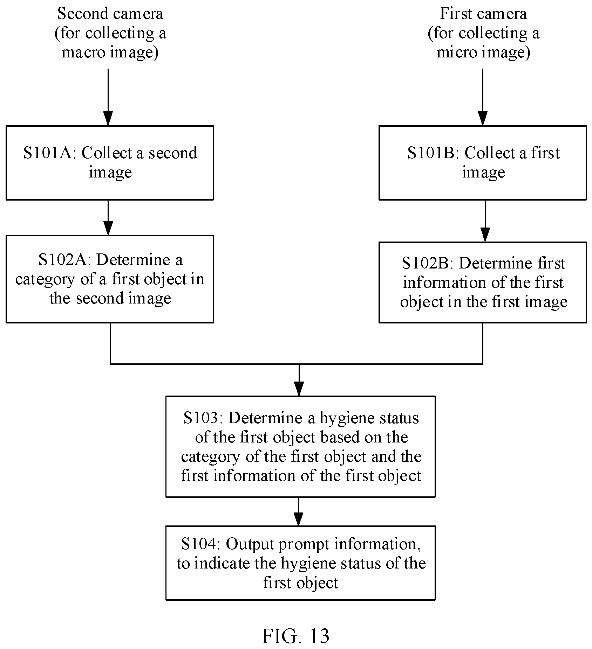

Based on the foregoing technical principle, the following describes, with reference to an example, a process of a method for identifying a hygiene status of an object. FIG. 13 is a schematic flowchart of a method for identifying a hygiene status of an object according to an embodiment of this application. As shown in FIG. 13, the method for identifying a hygiene status of an object may include the following steps.

Step S101A: Collect a second image by using a second camera.

An electronic device collects the second image by using the second camera. The second image is a macro image, the second camera is one or more cameras configured to collect the macro image, and the second image includes a first object.

Step S102A: Determine a category of the first object in the second image.

The electronic device determines the category of the first object based on the second image. The category of the first object may be a main category, for example, food or an insect, or may be a subcategory, for example, an apple, a banana, a grape, bread, an ant, or a hand, or may be a scene, for example, air or a river or sea. For example, the electronic device collects an image of an apple by using the second camera. The electronic device determines, based on the collected image, that the image includes one object, and identifies the first object as the apple based on the image. To be specific, the category of the first object is the apple. For another example, the electronic device collects, by using the second camera, an image in which a hand holds an apple. The electronic device determines, based on the collected image, that the image includes two objects: the first object and a second object, and identifies the first object and the second object as the apple and the hand based on image. The category of the first object may be the apple, and the category of the first object may be alternatively the hand. When the category of the first object is the apple, a category of the second object is the hand. When the category of the first object is the hand, a category of the second object is the apple.

It may be understood that, when there is only one target object in the second image, the target object is the first object, and the electronic device identifies the category of the first object based on an image recognition technology, or when there are two or more target objects in the second image, the first object may be determined according to a preset rule or based on a received user operation, and the category of the first object may be identified based on an image recognition technology. The following describes, by ways of example, several methods for determining the first object in the second image.

Method 1: Determine the first object from a plurality of target objects according to the preset rule.

The preset rule may be that a target object that occupies a largest proportion of the entire image is used as the first object, or may be that a target object that occupies a largest proportion of the central position of the image is used as the first object, or may be that all target objects that occupy the central position of the image may be used as the first objects, or may be that all target objects in the image may be used as the first objects. The electronic device determines the first object from the plurality of target objects in the second image according to the preset rule, and after determining the first object, identifies the category of the first object based on the image.

For example, the electronic device collects the second image by using the second camera, and the second image includes four target objects: an apple, a hand, a banana, and a table. When the preset rule is that the target object that occupies the largest proportion of the entire picture is used as the first object, the electronic device determines the first object as the table. When the preset rule is that the target object that occupies the largest proportion of the central position of the image is used as the first object, the electronic device determines the first object as the apple.

Method 2: Determine the first object based on a detected user operation.

The user operation includes a user operation of inputting a voice/text/image. The electronic device detects the user operation, and determines the first object or the category of the first object.

For example, a user may draw a preset graph on the image, to select the first object. Specifically, if the image collected by the second camera is an image in which the hand holds the apple, the user draws a closed graph on the image, to indicate, as the first object, an object in a range covered by an area of the closed graph. If the object in the closed graph that is drawn by the user and that is received by the electronic device includes the apple, the first object is the apple. If the object in the closed graph that is drawn by the user and that is received by the electronic device includes the hand, the first object is the hand. If the object in the closed graph that is drawn by the user and that is received by the electronic device includes the apple and the hand, the first object and the second object are the apple and the hand.

In some possible embodiments, if the category of the first object detected by the electronic device does not match the first object, the user may correct the category of the first object. For example, refer to the accompanying drawings in FIG. 7a. In the left accompanying drawing in FIG. 7a, the user may change a category of an object by tapping the display area of the "Peach". When the electronic device receives a user operation for the display area of the "Peach", it indicates that the object "Peach" is to be modified. As shown in the right accompanying drawing in FIG. 7a, the electronic device prompts the user to input an object to be detected. When detecting "Apple" input by the user in the text box, the electronic device determines that the category of the object is the apple.

Optionally, the user may further modify the category of the first object to the apple in a voice input manner. When detecting the "Apple" input by the user in a voice manner, the electronic device determines that the category of the object is the apple.

Optionally, the user may alternatively enable, in a manner of triggering re-identification of the electronic device, the electronic device to re-identify the category of the object in the image. In the left accompanying drawing in FIG. 7a, the user may change the category of the object by tapping the display area of the "Peach". When the electronic device receives a user operation for the display area of the "Peach", it indicates that the object "Peach" is to be modified. As shown in the right accompanying drawing in FIG. 7a, when detecting a user operation performed by the user on the re-identification icon, and the electronic device re-identifies the "peach". An identified category is different from that of the peach.

Optionally, a manner of determining the category of the first object is not limited to Steps S101A and S102A, and a manner of determining the category of the second object is similar to the manner of determining the category of the first object. In some possible embodiments, the electronic device does not need to obtain the macro image by using the second camera, but may determine the category of the first object based on a detected user operation. The user operation includes manners such as a text input, an image input, and a voice input. For example, refer to the accompanying drawing in FIG. 7b. When detecting "Apple" entered by the user in the text box, the electronic device determines that the category of the first object is the apple. The electronic device may alternatively obtain, as the category of the first object through image recognition based on an image input by the user, a category of an object in the image input by the user. The image may come from a gallery or a network. The electronic device may alternatively obtain, as the category of the first object through voice recognition based on a voice input by the user, a category of an object in the voice input by the user.

In some possible embodiments, the electronic device does not need to obtain the macro image by using the second camera, but may obtain the macro image by using a microscopic camera (for example, the microscopic camera 12 in FIG. 1a), and determine the category of the first object based on the macro image obtained by the microscopic camera. Specifically, a magnification of the microscopic camera may range from 1 to 400. When the magnification of the microscopic camera ranges from 1 to 5, the macro image may be obtained. When the magnification of the microscopic camera ranges from 200 to 400, a micro image may be obtained. By automatically changing the magnification of the microscopic camera, the microscopic camera collects the macro image and the micro image of the first object, and the electronic device identifies the category of the first object in the macro image.

Step S101B: Collect a first image by using a first camera.

The electronic device collects the first image by using the first camera. The first image is a micro image, the first camera is one or more cameras that collect the micro image, and the first image includes a bacterium existing on the first object.

In some possible embodiments, the electronic device displays a first user interface. When the electronic device receives a user operation performed on a first icon, in response to the user operation performed on the first icon, the electronic device collects the first image by using the first camera. The first user interface includes the first icon. FIG. 2a to FIG. 2c are used as an example. The first user interface may be the interface in FIG. 2b, and the first icon is the icon of the micro mode 303A. When the electronic device receives a user operation (for example, a tap) for the icon of the micro mode 303A, the electronic device collects the first image by using the first camera. In this case, an application interface is shown in FIG. 2c. The electronic device displays, on the display interface in real time, a preview image of data collected by the first camera. The preview image is a micro image, and the bacterium existing on the photographed object is displayed in the preview image.

In some possible embodiments, the electronic device displays a home screen. The home screen includes a plurality of application icons, and the plurality of application icons include a first application icon. When the electronic device receives a user operation for the first application icon, the electronic device collects the first image by using the first camera. Refer to FIG. 3. The home screen is the interface in the part a in FIG. 3, and the first application icon is the application icon of the micro mode 207. When receiving a user operation (for example, a tap) on the icon of the micro mode 207, the electronic device collects the first image by using the first camera. In this case, an application interface is shown in the part b in FIG. 3. The electronic device displays, on the display interface, the image collected by the first camera. The image is a micro image, and the bacterium existing on the photographed object is displayed in the image.

Step S102B: Determine first information of the first object in the first image.

The electronic device determines the first information of the first object based on the first image. The first information includes a situation of the bacteria existing on the first object, and includes a category and a quantity of the bacteria.

The electronic device collects the first image of the first object by using the first camera, and determines the category and the quantity of the bacteria on the first object based on a target detection algorithm (for example, the foregoing YOLOv3 algorithm). For example, the electronic device collects the first image of the first object by using the first camera, and determines, based on the YOLOv3 algorithm, that the bacteria on the first object in the first image include bacteria 1, bacteria 2, bacteria 3, and bacteria 4, and quantities of the bacteria 1, the bacteria 2, the bacteria 3, and the bacteria 4.

In a possible implementation, the electronic device may determine the first information of the first object in the first image based on a knowledge graph (which may be specifically a knowledge graph corresponding to the category of the first object) of the first object. The knowledge graph of the first object includes a common bacterial category corresponding to the first object, so that a reference function can be used when the bacterial category on the object is determined based on the micro image of the object (for example, whether the bacterial category is the common bacterial category on the object is preferably compared), to improve bacterium identification efficiency. For example, the electronic device identifies that the category of the first object is the hand. The electronic device can learn, with reference to a knowledge graph of the hand, that common bacteria distributed on the hand include Escherichia coli, a streptococcus, and pseudomonas aeruginosa. In a process of identifying a bacterial category on the hand, the electronic device may preferably compare the bacterial category with these common bacteria on the hand such as the Escherichia coli, the streptococcus, and the pseudomonas aeruginosa. When a similarity between a bacterium and the Escherichia coli reaches a threshold, it may be determined that the bacterial category is the Escherichia coli. There is no need to compare with a category of another bacterium (for example, an uncommon bacterium on the hand), to improve efficiency of identifying the bacterial category.

Optionally, the reference function of the knowledge graph may be further reflected in the following example. For example, the electronic device identifies that the category of the first object is the hand, and in a process in which the electronic device identifies the bacterial category on the hand according to the target detection algorithm, because appearances of some bacteria are very similar, for example, salmonella and the Escherichia coli, it is difficult for the electronic device to accurately identify the bacterial type by appearance. In this case, the electronic device can learn, with reference to the knowledge graph of the hand, that the common bacteria distributed on the hand include the Escherichia coli, but do not include the salmonella. Accordingly, when a probability of identifying some bacteria as the salmonella is similar to a probability of identifying the bacteria as the Escherichia coli (for example, the probability of the salmonella is 51%, and the probability of the Escherichia coli is 49%), the electronic device preferably identifies the bacteria as the Escherichia coli, to improve efficiency and accuracy of identifying the bacterial category.

In a possible implementation, the electronic device may receive a bacterial category input by the user, and identify and screen the bacterial category in a targeted manner. For example, if the user wants to detect distribution of Escherichia coli on the apple, the user inputs a name of a bacterial category as the Escherichia coli. In response to the user input, the electronic device identifies the Escherichia coli in a micro image of the apple in a targeted manner, to obtain a quantity and the distribution of the Escherichia coli. The first information of the first object includes a quantity and distribution of Escherichia coli. In a possible scenario, it is assumed that the Escherichia coli is an uncommon bacterium on the apple. In this case, if the electronic device obtains common bacteria on the apple only based on a knowledge graph of the apple, and identifies these common bacteria, a requirement of the user may not be met. In this case, a specific bacterial category concerned by the user may be determined by receiving an input of the user, to identify the specific bacterial category in a targeted manner (which may be preferably identifying whether the specific bacterial category exists on the object). In this way, personalized requirements of different users can be better met without being limited by the knowledge graph of the object.

Optionally, based on the foregoing implementation, the reference function of the knowledge graph may be further reflected in the following example. For example, a knowledge graph may include only a common bacterial category corresponding to an object, and for some bacteria (bacteria that are not strongly associated with the object) that are not in the knowledge graph of the object, including a new bacterium or a bacterium recently concerned by the public, the electronic device may determine, based on a received user operation, a bacterial category concerned by the user (the new bacterium or the bacterium recently concerned by the public may be provided on an interface for the user to select, to focus on screening whether the bacterium exists in a micro image, or an input box is provided to receive a bacterial name that the user inputs and wants to focus on screening), and identify and screen the bacterial category in a targeted manner. In this way, when the bacterial category is determined based on the micro image, a bacterium especially concerned by the user may be preferably screened (further, a screened bacterial category may further include a common bacterium on the object). Prompt information output by the electronic device may include a prompt indicating whether the bacterium concerned by the user exists. For example, the electronic device identifies that the category of the first object is the hand. The electronic device can learn, with reference to the knowledge graph of the hand, that the common bacteria distributed on the hand include the Escherichia coli, the streptococcus, the pseudomonas aeruginosa, and the like. The electronic device receives salmonella as the bacterial name that the user inputs and wants to detect. It is assumed that appearances of the salmonella and the Escherichia coli are very similar. In this case, in a process in which the electronic device identifies the bacterial category on the hand, it is difficult for the electronic device to accurately identify the bacterial category by appearance. If a probability of identifying some bacteria as the salmonella is similar to a probability of identifying the bacteria as the Escherichia coli (for example, the probability of the salmonella is 51%, and the probability of the Escherichia coli is 49%), the electronic device may output probability information of existence of the salmonella (and further, may further prompt the user with the probability that the bacteria existing on the object is the Escherichia coli).

Step S103: Determine a hygiene status of the first object based on the category of the first object and the first information of the first object.

After obtaining the category of the first object and the first information of the first object, the electronic device determines the hygiene status of the first object based on the knowledge graph of the first object and the situation of the bacteria existing on the first object. The knowledge graph of the first object indicates an association relationship between at least one type of bacteria and a hygiene status of the category of the first object. For example, when the category of the first object is the food, the bacterium existing on the first object may be a yeast, an actinomycete, an edible fungus, or the like. When the category of the first object is the hand, the bacterium existing on the first object may be a staphylococcus, Escherichia coli, an influenza virus, or the like. When the category of the first object is the air, the bacterium existing on the first object may be Neisseria meningitidis, a tubercle bacillus, a hemolytic streptococcus, corynebacterium diphtheriae, bordetella pertussis, or the like.

In other words, after obtaining the category of the first object, the electronic device obtains, from the knowledge graph, a knowledge graph of the hygiene status of the first object or a hygiene status of an object (the second object) of a same category as the first object. For example, the electronic device obtains that the category of the first object is the "apple", and obtains, based on the category of the first object, a knowledge graph of "the apple is unclean". The knowledge graph of "the apple is unclean" indicates an association relationship between uncleanness of the apple and a bacterium. A lower left side in FIG. 8 shows a knowledge graph of an apple by example. Bacteria related to the fact that the apple is unclean include a bacillus, a penicillus, rhodotorula, and the like. A hygiene status of the apple is determined according to an association rule with reference to a bacterium that exists on the apple and that is identified by the electronic device.

The association rule includes: The hand is unclean because a quantity of first bacteria exceeds a first threshold, the hand is unclean because a quantity of second bacteria exceeds a second threshold, and the like. In this embodiment of this application, the hygiene status may be determined based on a final score in a score counting manner. For example, when the category of the first object is the hand, in the knowledge graph of the hand, bacteria related to the fact that the hand is unclean include the staphylococcus, the Escherichia coli, the influenza virus, and the like. When a quantity of the staphylococci exceeds a preset first threshold, it is determined that the hand is unclean due to the bacteria. When a scoring manner is used, a score of the fact that the hand is unclean due to the staphylococci is 5. When a quantity of the Escherichia coli exceeds a preset second threshold, it is determined that the hand is unclean due to the Escherichia coli. When the scoring manner is used, a score of the fact that the hand is unclean due to the Escherichia coli is 5, and a statistical score is 10. Scores of the bacteria related to the fact that the hand is unclean are counted in sequence, and a hygiene status of the hand is determined based on a final score.

Optionally, when the quantity of first bacteria exceeds the first threshold, a larger quantity of first bacteria indicates a greater degree of impact/larger calculation weight of the first bacteria on/for the hygiene status. For example, when the category of the first object is the hand, in the knowledge graph of the hand, bacteria related to the fact that the hand is unclean include the staphylococcus, the Escherichia coli, the influenza virus, and the like. When a quantity of the staphylococci exceeds a preset first threshold, it is determined that the hand is unclean due to the staphylococci. When a scoring manner is used, a score of the fact that the hand is unclean is 5. When the quantity of the staphylococci exceeds the first threshold, the quantity of the staphylococci exceeds a second threshold (the second threshold is greater than the first threshold). In this case, a score of the fact that the hand is unclean hand due to the staphylococci is 10.

Optionally, different bacteria have different degrees of impact/calculation weights on/for the hygiene status. For example, when the category of the first object is a vegetable, in a knowledge graph of the vegetable, bacteria related to the fact that the vegetable is unclean include mildew, a bacillus, salmonella, shigella, staphylococcus aureus, and the like. Because the salmonella, the shigella, and the staphylococcus aureus are pathogenic bacteria, a priority of a pathogenic bacterium is set to the highest. If the electronic device identifies that the foregoing pathogenic bacterium exists on the vegetable (regardless of whether a quantity exceeds a threshold), the electronic device determines that the vegetable is unhygienic.

In some possible implementations, after determining that the hygiene status of the first object is unhygienic, the electronic device obtains distribution of the bacteria on the first object based on the first image of the first object, and then determines a specific unhygienic area of the first object based on the distribution of the bacteria. For example, in a possible implementation, the first object is the hand, and the electronic device may perform area division on an image of the hand, and then evaluate a hygiene status of a bacterial situation in each area, to obtain the specific unhygienic area of the hand. To be specific, when outputting prompt information, the electronic device may indicate, on a macro image, a specific unhygienic area.

In some possible implementations, based on continuous improvement of the knowledge graph, output prompt content may further indicate the hygiene status of the object from different perspectives. For example, the electronic device obtains that the category of the first object is the apple, and based on the category of the first object, obtains the knowledge graph of "the apple is unclean", may further obtain a knowledge graph of "the apple is rotted", and may further obtain a knowledge graph of "the apple is not fresh". Based on the three knowledge graphs, whether the hygiene status of the apple is unclean, rotted, or not fresh is determined according to the association rule with reference to the bacterium that exists on the apple and that is identified by the electronic device. It may be understood that three is merely an example digit, and there may be more or fewer cases in an actual situation.

In some possible implementations, the electronic device obtains that the category of the first object is the apple, and based on the category of the first object, obtains the knowledge graph of "the apple is unclean", the knowledge graph of "the apple is rotted", and the knowledge graph of "the apple is not fresh". It is determined, based on the second image, that the bacteria existing on the first object include the bacteria 1, the bacteria 2, the bacteria 3, the bacteria 4, and the like. If a quantity of the bacteria 1 can result in "the apple is unclean", a score of the inference "the apple is unclean" is 5, if a quantity of the bacteria 2 can result in "the apple is rotted" and "the apple is not fresh", scores of the inferences "the apple is rotted" and "the apple is rotted" are respectively 5, if a quantity of the bacteria 3 can result in "the apple is rotted", and a weight of the bacteria 3 is large, and reaches 100, a score of the inference "the apple is rotted' is 100, and so on. The inference that "the apple is rotted" may be obtained based on a final score.

In some possible implementations, the first information may further include information, for example, texture, an air hole, and a color and luster of the object. A freshness degree of the object may be determined by analyzing the information, for example, the texture, the air hole, and the color and the luster on the first object.

Step S104: Output prompt information, to indicate the hygiene status of the first object.

After determining the hygiene status of the first object, the electronic device outputs the prompt information, to indicate the hygiene status of the first object.

The electronic device obtains the hygiene status of the first object after determining the category of the first object and the first information of the first object, and outputs the prompt information after receiving an instruction for obtaining the hygiene status of the first object. For example, in FIG. 8a, when the user taps the cursor 70 for an apple, the electronic device outputs prompt information.

In some possible implementations, in FIG. 8a, when the user taps the cursor 70 for the apple, the electronic device performs analysis and calculation with reference to the apple and first information of the apple, to obtain a hygiene status of the apple, and outputs the prompt information.

Optionally, the electronic device displays the macro image or the micro image of the first object, and displays the prompt information on the macro image or the micro image of the first object.

In some possible implementations, the electronic device displays macro images of the first object and the second object. When obtaining a user operation for a display area of the first object, the electronic device outputs first prompt information that indicates the hygiene status of the first object. When obtaining a user operation for a display area of the second object, the electronic device outputs second prompt information that indicates a hygiene status of the second object. Refer to FIG. 8a to FIG. 8d. In FIG. 8a, the electronic device receives a user operation (for example, a tap) for the cursor for the apple, and in response to the tap operation, an image collected by the first camera is displayed in the display area in FIG. 8b, and prompt information about a hygiene status of the apple is output. In FIG. 8c, the electronic device receives a user operation (for example, a tap) for the cursor for the hand, and in response to the tap operation, an image collected by the first camera is displayed in the display area in FIG. 8d, and prompt information about a hygiene status of the hand is output.

A manner of outputting the prompt information may be alternatively a manner of direct output. After determining the hygiene status of the first object, the electronic device outputs the prompt information on an image of the first object. Refer to FIG. 9a and FIG. 9b. In FIG. 9a, the electronic device outputs prompt information of the apple and the hand on the macro image of the first object. In FIG. 9b, the electronic device outputs prompt information of the apple and the hand on the micro image of the first object.

In some possible implementations, a manner of prompting the prompt information may be a manner of outputting a text (for example, a manner of displaying the prompt area 60 or the prompt area 61 in FIG. 8a to FIG. 8d or FIG. 9a and FIG. 9b), or may be a manner of using an image, a voice, vibration, an indicator, or the like, or may be indicating the hygiene status by using a display color of a cursor or a text. For example, FIG. 9a includes the cursor 70 indicating the apple and the cursor 71 indicating the hand. If the electronic device detects that the apple is unhygienic, the cursor 70 for the apple is displayed in red. If the electronic device detects that the hand is hygienic, the cursor 71 for the hand is displayed in green.

In some possible implementations, output content of the prompt information is not limited. The output content of the prompt information may include a description of the hygiene status of the object, for example, the object is unhygienic, the object is unclean, or a hygienic degree of the object is low, may also include a suggestion for improving the hygiene status of the object, for example, cleaning is recommended, wiping is recommended, or heating is recommended, may also include a suggestion for a manner of processing the object, for example, discarding is recommended, may further include a description of impact of a bacterial category on the hygiene status, for example, food is unhygienic due to a larger quantity of Escherichia coli, and heating at a high temperature of 100 degrees centigrade for sterilization is recommended, and may further include a description of a freshness degree of the object, for example, an apple is not fresh, a banana is rotted, and the like.

In this embodiment of this application, the electronic device may photograph and store, on any application interface in response to a user operation received on an image shooting control, display content in a display area on the application interface. The user may view a micro image and prompt information of the object by using a gallery.

In this embodiment of this application, the electronic device collects the micro image by using the first camera, and displays the micro image on a display of the electronic device, so that the user can view and photograph the micro world. In addition, the electronic device may identify a bacterial category in the micro image based on the collected micro image, and display, to the user, a bacterial form and a bacterial name that exist on the object. The user may further perform some operations on the electronic device, so that the electronic device can determine a name of a bacterial category that the user wants to detect. The electronic device can detect and identify the bacterial category in a targeted manner. In addition, the electronic device can analyze the hygiene status of the object based on identified bacterial category and quantity, notify the user of the hygiene status of the object, and provide a corresponding hygiene suggestion.

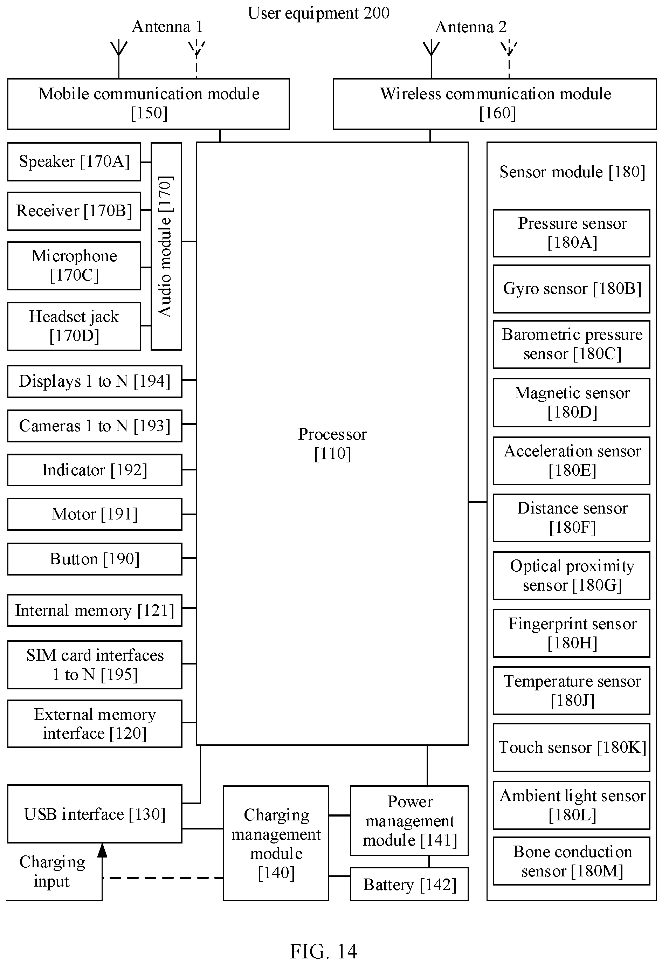

FIG. 14 is a schematic diagram of a structure of an electronic device 100.

The electronic device 100 is used as an example below to describe embodiments in detail. It should be understood that the electronic device 100 may have more or fewer components than those shown in the figure, or two or more components may be combined, or different component configurations may be used. Various components shown in the figure may be implemented in hardware that includes one or more signal processing and/or application-specific integrated circuits, software, or a combination of hardware and software.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention constitutes no specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on an instruction operation code and a time sequence signal, to complete control of instruction fetching and instruction execution.

In this application, the processor 110 may be configured to determine a category of a first object and first information of the first object, and the processor 110 determines a hygiene status of the first object based on the category of the first object and the first information of the first object. The hygiene status may be represented in a form of a score, and a higher score indicates a more hygienic object. The hygiene status may be alternatively represented in a form of a text description, for example, described by using a text, for example, "hygienic", "unhygienic", or "very hygienic". In other words, a user may conveniently observe a micro image of an object in life, and determine distribution of microorganisms on the object by using the micro image, to obtain a hygiene suggestion for the object.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor may directly invoke the instructions or the data from the memory. This avoids repeated access and reduces a waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that an interface connection relationship between the modules that is shown in this embodiment of the present invention is merely an example for description, and constitutes no limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from a charger. The charger may be a wireless or wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. The charging management module 140 supplies power to the electronic device through the power management module 141 while charging the battery 142.

The power management module 141 is configured to connect to the battery 142, the charging management module 140, and the processor 110. The power management module 141 receives an input of the battery 142 and/or the charging management module 140, to supply power to the processor 110, the internal memory 121, an external memory, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may be alternatively disposed in the processor 110. In some other embodiments, the power management module 141 and the charging management module 140 may be alternatively disposed in a same component.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a solution that includes wireless communication such as 2G, 3G, 4G, and 5G and that is applied to the electronic device 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert an amplified signal into an electromagnetic wave for radiation through the antenna 1. In some embodiments, at least some function modules in the mobile communication module 150 may be disposed in the processor 110. In some embodiments, at least some function modules in the mobile communication module 150 may be disposed in a same component as at least some modules of the processor 110.

The modem processor may include a modulator and a demodulator. The modulator is configured to modulate a to-be-sent low-frequency baseband signal into a medium/high-frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by an audio device (which is not limited to the speaker 170A, the receiver 170B, or the like), or displays an image or a video by the display 194. In some embodiments, the modem processor may be an independent component. In some other embodiments, the modem processor may be independent of the processor 110, and is disposed in a same component as the mobile communication module 150 or another function module.

The wireless communication module 160 may provide a solution that is applied to the electronic device 100 and that includes wireless communication such as a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near-field communication (near-field communication, NFC), and an infrared (infrared, IR) technology. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave for radiation through the antenna 2.

The electronic device 100 implements a display function by using the GPU, the display 194, the application processor, and the like. The GPU is a microprocessor for image processing, and is connected to the display 194 and the application processor. The GPU is configured to perform mathematical and geometric calculation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, quantum dot light emitting diodes (quantum dot light emitting diodes, QLEDs), or the like. In some embodiments, the electronic device 100 may include one or N displays 194, where N is a positive integer greater than 1.

The electronic device 100 may implement an image shooting function by using the ISP, the camera 193, the video codec, the GPU, the display 194, the application processor, and the like.

The ISP is configured to process data fed back by the camera 193. For example, during image shooting, a shutter is pressed, and light is transmitted to a photosensitive element of the camera through the camera. An optical signal is converted into an electrical signal. The photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of an image shooting scenario. In some embodiments, the ISP may be disposed in the camera 193.

The camera 193 is configured to capture a static image or a video, and includes a medium-focus camera, a long-focus camera, a wide-angle camera, an ultra-wide-angle camera, a time of flight (TOF) depth-sensing camera, a movie camera, a macro camera, and the like. For different functional requirements, the electronic device may be equipped with dual cameras (two cameras), triple cameras (three cameras), quadruple cameras (four cameras), quintuple cameras (five cameras), even sextuple cameras (six cameras), or another combination of cameras, to improve image shooting performance. An optical image of an object is generated through the camera, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format, for example, RGB or YUV In some embodiments, the electronic device 100 may include one or N cameras 193, where N is a positive integer greater than 1.

In this embodiment of this application, the camera 193 may further include a microscopic camera. The microscopic camera is configured to collect a micro image. The microscopic camera has a specific magnification, to observe a bacterium. A micro image of an object is collected by using the microscopic camera, to obtain a category and a quantity of bacteria existing on the object, and further obtain information such as a color and luster, texture, and an air hole of the object. A hygiene status of the object is obtained based on analysis and calculation for the micro image.

The digital signal processor is configured to process a digital signal, and may further process another digital signal in addition to a digital image signal. For example, when the electronic device 100 selects a frequency, the digital signal processor is configured to perform Fourier transformation and the like on frequency energy.

The video codec is configured to compress or decompress a digital video. The electronic device 100 may support one or more video codecs. In this way, the electronic device 100 can play or record videos in a plurality of encoding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a mode of transmission between human brain neurons, and may further continuously perform self-learning. Applications such as intelligent cognition of the electronic device 100, for example, image recognition, facial recognition, speech recognition, and text understanding, may be implemented by using the NPU.

The external memory interface 120 may be configured to connect to an external storage card, for example, a micro SD card, to extend a storage capability of the electronic device 100. The external storage card communicates with the processor 110 through the external memory interface 120, to implement a data storage function. For example, files such as music and a video are stored in the external storage card.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, an application required by at least one function (for example, a voice playing function or an image playing function), and the like. The data storage area may store data (for example, audio data or a phone book) created in a process of using the electronic device 100, and the like. In addition, the internal memory 121 may include a high-speed random access memory, and may further include a non-volatile memory, for example, at least one magnetic disk storage device, a flash memory, or a universal flash storage (universal flash storage, UFS).

The electronic device 100 may implement an audio function, for example, music playing or recording, by using the audio module 170, the speaker 170A, the receiver 170B, the microphone 170C, the headset jack 170D, the application processor, and the like.

The audio module 170 is configured to convert digital audio information into an analog audio signal output, and is also configured to convert an analog audio input into a digital audio signal. The audio module 170 may be further configured to encode and decode an audio signal. In some embodiments, the audio module 170 may be disposed in the processor 110, or some function modules of the audio module 170 are disposed in the processor 110.

The button 190 includes a power button, a volume button, and the like. The button 190 may be a mechanical button or a touch button. The electronic device 100 may receive a button input, and generate a button signal input related to a user setting and function control of the electronic device 100.

The indicator 192 may be an indicator light, and may be configured to indicate a charging status and a power change, or may be configured to indicate a message, a missed call, a notification, and the like.

A software system of the electronic device 100 may use a layered architecture, an event-driven architecture, a microkernel architecture, a micro service architecture, or a cloud architecture. In this embodiment of the present invention, an Android system of a layered architecture is used as an example to illustrate the software structure of the electronic device 100.

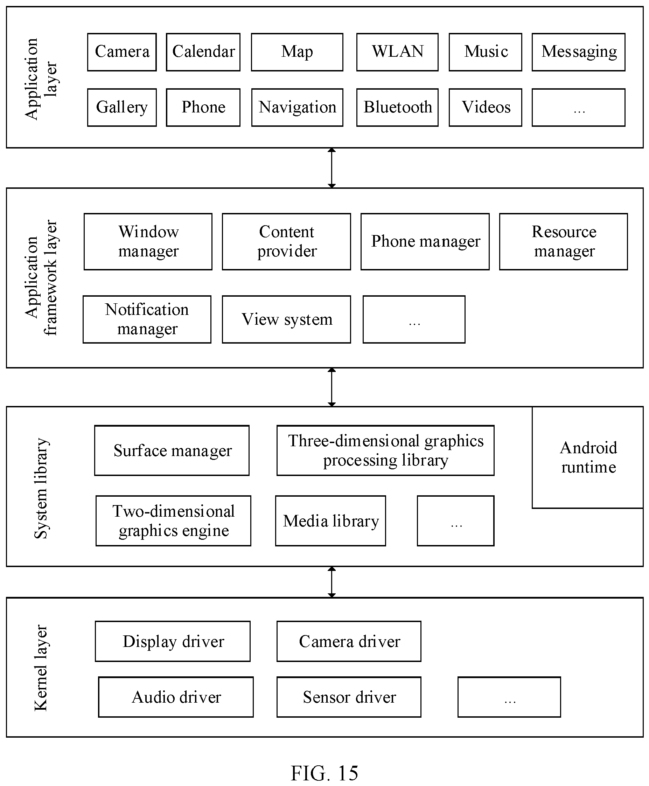

FIG. 15 is a block diagram of a software structure of the electronic device 100 according to an embodiment of the present invention.

In the layered architecture, software is divided into several layers, and each layer has a clear role and task. The layers communicate with each other through a software interface. In some embodiments, the Android system is divided into four layers from top to bottom: an application layer, an application framework layer, an Android runtime (Android runtime) and system library, and a kernel layer.

The application layer may include a series of application packages.

As shown in FIG. 15, the application packages may include applications such as Camera, Gallery, Calendar, Phone, Map, Navigation, WLAN, Bluetooth, Music, Videos, and Messaging.

In this application, a floating launcher (floating launcher) may be further newly added to the application layer, is used as a default display application in a small window 30, and is provided for the user to enter another application.

The application framework layer provides an application programming interface (application programming interface, API) and a programming framework for an application at the application layer. The application framework layer includes some predefined functions.

As shown in FIG. 11, the application framework layer may include a window manager (window manager), a content provider, a view system, a phone manager, a resource manager, a notification manager, an activity manager (activity manager), and the like.

The window manager is used to manage a window program. The window manager may obtain a size of the display, determine whether there is a status bar, lock the display, take a screenshot of the display, and the like. In this application, FloatingWindow may be extended based on native PhoneWindow of Android, and is dedicated to displaying the foregoing small window 30, to distinguish the small window from a common window. The window has an attribute of being displayed at a top layer of a series of windows in a floating manner. In some optional embodiments, a proper value of a size of the window may be provided based on an actual size of a screen according to an optimal display algorithm. In some possible embodiments, an aspect ratio of the window may be considered as an aspect ratio of a screen of a conventional mainstream mobile phone by default. In addition, to help the user close and hide the small window, an extra close button and a minimize button may be drawn in the upper right corner. In addition, in a window management module, some gesture operations of the user are received. If a gesture operation conforms to an operation gesture of the foregoing small window, the window is frozen, and an animation effect of moving the small window is played.

The content provider is used to store and obtain data, and enable the data to be accessed by an application. The data may include a video, an image, audio, calls that are made and answered, a browsing history, a bookmark, a phone book, and the like.

The view system includes visual controls such as a control for displaying a text and a control for displaying a picture. The view system may be used to construct an application. A display interface may include one or more views. For example, a display interface including an SMS message notification icon may include a text display view and an image display view. In this application, a button view used for operations such as closing and minimization may be correspondingly added to the small window, and bound to the FloatingWindow in the window manager.

The phone manager is used to provide a communication function of the electronic device 100, for example, management of call statuses (including answering, declining, and the like).

The resource manager provides various resources such as a localized character string, an icon, a picture, a layout file, and a video file for an application.

The notification manager enables an application to display notification information in a status bar, and may be used to convey a notification message. The notification manager may automatically disappear after a short pause without user interaction. For example, the notification manager is used to notify download completion, and give a message notification. The notification manager may be alternatively a notification that appears in a top status bar of the system in a form of a graph or a scroll bar text, for example, a notification of an application running in the background, or may be a notification that appears on the display in a form of a dialog window. For example, text information is displayed in the status bar, an announcement is given, the electronic device vibrates, or an indicator light blinks.

The activity manager is used to manage activities that are running in the system, including a process (process), an application, a service (service), task (task) information, and the like. In this application, an activity task stack dedicated to managing an activity of an application displayed in the small window 30 may be newly added to the activity manager module, to ensure that the activity and a task of the application in the small window do not conflict with an application displayed on the screen in full screen.

The Android runtime includes a kernel library and a virtual machine. The Android runtime is responsible for scheduling and management of the Android system.

The kernel library includes two parts: a function that needs to be invoked in a Java language and a kernel library of Android.

The application layer and the application framework layer run on the virtual machine. The virtual machine executes Java files at the application layer and the application framework layer as binary files. The virtual machine is used to perform functions such as object lifecycle management, stack management, thread management, security and exception management, and garbage collection.

The system library may include a plurality of function modules, for example, an input manager (input manager), an input dispatcher (input dispatcher), a surface manager (surface manager), a media library (Media Library), a three-dimensional graphics processing library (for example, an OpenGL ES), and a 2D graphics engine (for example, an SGL).

The input manager is responsible for obtaining event data from an input driver at an underlying layer, parsing and encapsulating the event data, and sending processed event data to the input dispatcher.

The input dispatcher is used to store window information. After receiving an input event from the input manager, the input dispatcher searches for an appropriate window in windows stored by the input dispatcher, and dispatches the event to the window.

The surface manager is used to manage a display subsystem and provide fusion of 2D and 3D layers for a plurality of applications.

The media library supports playback and recording in a plurality of frequently used audio and video formats, a static image file, and the like. The media library may support a plurality of audio and video encoding formats, for example, MPEG-4, H.264, MP3, AAC, AMR, JPG, and PNG.

The three-dimensional graphics processing library is used to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The following describes an example of a working process of software and hardware of the electronic device 100 with reference to an image shooting scenario.

When the touch sensor 180K receives a touch operation, a corresponding hardware interruption is sent to the kernel layer. The kernel layer processes the touch operation into an original input event (including information such as touch coordinates and a time stamp of the touch operation). The original input event is stored at the kernel layer. The application framework layer obtains the original input event from the kernel layer, and identifies a control corresponding to the input event. For example, the touch operation is a single-tap operation and a control corresponding to the single-tap operation is a control of a camera application icon. A camera application invokes an interface at the application framework layer, to start the camera application. Then, the camera driver is started by invoking the kernel layer, and a static image or a video is captured by using the camera 193.

The software system shown in FIG. 15 relates to presentation of an application (for example, the gallery or a file manager) that uses a micro display capability, an instant sharing module that provides a sharing capability, a content providing module that stores and obtains data, the application framework layer that provides a WLAN service and a Bluetooth service, and the kernel layer and the underlying layer that provide a WLAN capability, a Bluetooth capability, and a basic communication protocol.

An embodiment of this application further provides a computer-readable storage medium. All or some of the procedures in the foregoing method embodiments may be completed by a computer program instructing related hardware. The program may be stored in the foregoing computer storage medium. When the program is executed, the procedures of the foregoing method embodiments may be included. The computer-readable storage medium includes any medium that can store program code, for example, a read-only memory (read-only memory, ROM), a random access memory (random access memory, RAM), a magnetic disk, or an optical disc.

All or some of the foregoing embodiments may be implemented by using software, hardware, firmware, or any combination thereof. When software is used to implement the foregoing embodiments, all or some of the embodiments may be implemented in a form of a computer program product. The computer program product includes one or more computer instructions. When the computer program instruction is loaded and executed on a computer, the procedure or functions according to embodiments of this application are all or partially generated. The computer may be a general purpose computer, a dedicated computer, a computer network, or another programmable apparatus. The computer instruction may be stored in a computer-readable storage medium, or may be transmitted by using a computer readable storage medium. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

The steps of the method in embodiments of this application may be adjusted in sequence, combined, or deleted based on an actual requirement. "Based on" and "by using" in this application may be understood as "at least based on" and "at least by using".

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the invention as defined by the appended claims.

## Claims

1. A method for identifying a hygiene status of an object, comprising:
collecting (S101A), by an electronic device, a macro image of a first object by using a first camera or a second camera;
determining (S102A), by the electronic device, a category of a first object based on the macro image;
collecting (S101B), by the electronic device, a micro image of the first object by using the first camera, wherein the micro image includes a bacterium existing on the first object;
determining (S102B) by the electronic device, first information of the object by using the micro image, the first information including a bacterial category and a quantity of the bacteria;
determining (S103) a hygiene status of the first object based on the category of the first object and the first information of the first object; and
outputting (S104), by the electronic device, first prompt information to indicate the hygiene status of the first object.

2. The method according to claim 1, wherein the macro image is captured at a magnification of 1 to 5 and the micro image is captured at a magnification of 200 to 400.

3. The method according to claim 1, wherein the determining, by an electronic device, a category of a first object comprises: determining, by the electronic device, the category of the first object based on the macro image that is of the first object and that is collected by the first camera.

4. The method according to any one of claims 1 to 3, wherein wherein there is an association relationship between the first information of the first object and the hygiene status of the first object.

5. The method according to any of claims 1 to 4, wherein the first information comprises a quantity of first bacteria, and when the quantity of first bacteria is a first quantity, the first prompt information indicates that the hygiene status of the first object is a first hygiene status, or when the quantity of first bacteria is a second quantity, the first prompt information indicates that the hygiene status of the first object is a second hygiene status.

6. The method according to any one of claims 1 to 4, wherein the outputting, by the electronic device, first prompt information comprises:
displaying, by the electronic device, the micro image of the first object, and displaying the first prompt information on the micro image of the first object.

7. The method according to any one of claims 1 to 6, wherein the first prompt information comprises a suggestion for improving the hygiene status of the first object.

8. The method according to any one of claims 1 to 7, wherein the outputting, by the electronic device, first prompt information based on the category and the micro image of the first object comprises: determining, by the electronic device, the hygiene status of the first object based on the micro image and a knowledge graph corresponding to the category of the first object, wherein the knowledge graph comprises a common bacterial category corresponding to the category of the first object.

9. The method according to any one of claims 1 and 4 to 8, wherein the macro image further comprises a second object, and the method further comprises:
obtaining, by the electronic device, a user operation for a display area of the second object, and outputting second prompt information that indicates a hygiene status of the second object.

10. The method according to any one of claims 1 to 9, wherein the first camera is a microscopic camera, the second camera is a camera, the electronic device is a mobile phone, and the category of the first object is a hand.

11. An electronic device, comprising a touchscreen, a memory, and one or more processors, wherein the memory stores one or more programs, and when the one or more processors execute the one or more programs, the electronic device is enabled to implement the method according to any one of claims 1 to 10.

12. A computer storage medium, comprising computer instructions, wherein when the computer instructions are run on an electronic device, the electronic device is enabled to perform the method according to any one of claims 1 to 10.

## Patentansprüche

1. Verfahren zur Identifizierung eines Hygienestatus eines Objekts, umfassend:
Aufnehmen (S101A) eines Makrobilds eines ersten Objekts durch eine elektronische Vorrichtung unter Verwendung einer ersten Kamera oder einer zweiten Kamera;
Bestimmen (S102A) einer Kategorie eines ersten Objekts durch die elektronische Vorrichtung basierend auf dem Makrobild;
Aufnehmen (S101B) eines Mikrobildes des ersten Objekts durch die elektronische Vorrichtung unter Verwendung der ersten Kamera, wobei das Mikrobild ein auf dem ersten Objekt vorhandenes Bakterium umfasst;
Bestimmen (S102B) erster Informationen des Objekts durch die elektronische Vorrichtung unter Verwendung des Mikrobildes, wobei die ersten Informationen eine Bakterienkategorie und eine Menge der Bakterien umfassen;
Bestimmen (S103) eines Hygienestatus des ersten Objekts basierend auf der Kategorie des ersten Objekts und den ersten Informationen des ersten Objekts; und
Ausgeben (S104) erster Eingabeaufforderungsinformationen durch die elektronische Vorrichtung zur Anzeige des Hygienestatus des ersten Objekts.

2. Verfahren nach Anspruch 1, wobei das Makrobild mit einer Vergrößerung von 1 bis 5 und das Mikrobild mit einer Vergrößerung von 200 bis 400 aufgenommen wird.

3. Verfahren nach Anspruch 1, wobei das Bestimmen einer Kategorie eines ersten Objekts durch eine elektronische Vorrichtung umfasst: Bestimmen der Kategorie des ersten Objekts durch die elektronische Vorrichtung basierend auf dem Makrobild des ersten Objekts, das von der ersten Kamera aufgenommen wurde.

4. Verfahren nach einem der Ansprüche 1 bis 3, wobei zwischen den ersten Informationen des ersten Objekts und dem Hygienestatus des ersten Objekts eine Assoziationsbeziehung besteht.

5. Verfahren nach einem der Ansprüche 1 bis 4, wobei die ersten Informationen eine Menge erster Bakterien umfassen und wenn die Menge der ersten Bakterien eine erste Menge ist, geben die ersten Eingabeaufforderungsinformationen an, dass der Hygienestatus des ersten Objekts ein erster Hygienestatus ist, oder wenn die Menge der ersten Bakterien eine zweite Menge ist, geben die ersten Eingabeaufforderungsinformationen an, dass der Hygienestatus des ersten Objekts ein zweiter Hygienestatus ist.

6. Verfahren nach einem der Ansprüche 1 bis 4, wobei das Ausgeben der ersten Aufforderungsinformationen durch die elektronische Vorrichtung Folgendes umfasst:
Anzeigen des Mikrobilds des ersten Objekts durch die elektronische Vorrichtung und Anzeigen der ersten Aufforderungsinformationen auf dem Mikrobild des ersten Objekts.

7. Verfahren nach einem der Ansprüche 1 bis 6, wobei die ersten Aufforderungsinformationen einen Vorschlag zur Verbesserung des Hygienezustands des ersten Objekts umfasst.

8. Verfahren nach einem der Ansprüche 1 bis 7, wobei das Ausgeben erster Aufforderungsinformationen durch die elektronische Vorrichtung basierend auf der Kategorie und dem Mikrobild des ersten Objekts Folgendes umfasst: Bestimmen des Hygienestatus des ersten Objekts durch die elektronische Vorrichtung basierend auf dem Mikrobild und einem Wissensgraphen, der der Kategorie des ersten Objekts entspricht, wobei der Wissensgraph eine häufige Bakterienkategorie umfasst, die der Kategorie des ersten Objekts entspricht.

9. Verfahren nach einem der Ansprüche 1 und 4 bis 8, wobei das Makrobild ferner ein zweites Objekt umfasst und das Verfahren ferner umfasst:
Erlangen einer Benutzerbetätigung für einen Anzeigebereich des zweiten Objekts durch die elektronische Vorrichtung und Ausgeben zweiter Aufforderungsinformationen, die einen Hygienestatus des zweiten Objekts angeben.

10. Verfahren nach einem der Ansprüche 1 bis 9, wobei die erste Kamera eine Mikroskopkamera ist, die zweite Kamera eine Kamera ist, die elektronische Vorrichtung ein Mobiltelefon ist und die Kategorie des ersten Objekts eine Hand ist.

11. Elektronische Vorrichtung, umfassend einen Touchscreen, einen Speicher und einen oder mehrere Prozessoren, wobei der Speicher ein oder mehrere Programme speichert und die elektronische Vorrichtung, wenn der eine oder die mehreren Prozessoren das eine oder die mehreren Programme ausführen, in die Lage versetzt wird, das Verfahren nach einem der Ansprüche 1 bis 10 zu implementieren.

12. Computerspeichermedium, das Computeranweisungen umfasst, wobei, wenn die Computeranweisungen auf einer elektronischen Vorrichtung ausgeführt werden, es der elektronischen Vorrichtung ermöglicht wird, das Verfahren nach einem der Ansprüche 1 bis 10 durchzuführen.

## Revendications

1. Procédé d'identification d'un état d'hygiène d'un objet, comprenant :
la collecte (S101A), par un dispositif électronique, d'une image macroscopique d'un premier objet en utilisant une première caméra ou une seconde caméra ;
la détermination (S102A), par le dispositif électronique, d'une catégorie d'un premier objet sur la base de l'image macroscopique ;
la collecte (S101B), par le dispositif électronique, d'une image microscopique du premier objet en utilisant la première caméra, dans lequel l'image microscopique comporte une bactérie présente sur le premier objet ;
la détermination (S102B) par le dispositif électronique, de premières informations de l'objet en utilisant l'image microscopique, les premières informations comportant une catégorie bactérienne et une quantité de bactéries ;
la détermination (S103) d'un état d'hygiène du premier objet sur la base de la catégorie du premier objet et des premières informations du premier objet ; et
l'émission (S104), par le dispositif électronique, de premières informations d'invite pour indiquer l'état d'hygiène du premier objet.

2. Procédé selon la revendication 1, dans lequel l'image macroscopique est capturée à un grossissement de 1 à 5 et l'image microscopique est capturée à un grossissement de 200 à 400.

3. Procédé selon la revendication 1, dans lequel la détermination, par un dispositif électronique, d'une catégorie d'un premier objet comprend : la détermination, par le dispositif électronique, de la catégorie du premier objet sur la base de l'image macroscopique du premier objet et collectée par la première caméra.

4. Procédé selon l'une quelconque des revendications 1 à 3, dans lequel une relation d'association est établie entre les premières informations du premier objet et l'état d'hygiène du premier objet.

5. Procédé selon l'une quelconque des revendications 1 à 4, dans lequel les premières informations comprennent une quantité de premières bactéries, et lorsque la quantité de premières bactéries est une première quantité, les premières informations d'invite indiquent que l'état d'hygiène du premier objet est un premier état d'hygiène, ou lorsque la quantité de premières bactéries est une seconde quantité, les premières informations d'invite indiquent que l'état d'hygiène du premier objet est un second état d'hygiène.

6. Procédé selon l'une quelconque des revendications 1 à 4, dans lequel l'émission, par le dispositif électronique, de premières informations d'invite comprend :
l'affichage, par le dispositif électronique, de l'image microscopique du premier objet, et l'affichage des premières informations d'invite sur l'image microscopique du premier objet.

7. Procédé selon l'une quelconque des revendications 1 à 6, dans lequel les premières informations d'invite comprennent une suggestion destinée à améliorer l'état d'hygiène du premier objet.

8. Procédé selon l'une quelconque des revendications 1 à 7, dans lequel l'émission, par le dispositif électronique, de premières informations d'invite sur la base de la catégorie et de l'image microscopique du premier objet comprend : la détermination, par le dispositif électronique, de l'état d'hygiène du premier objet sur la base de l'image microscopique et d'un graphe de connaissances correspondant à la catégorie du premier objet, dans lequel le graphe de connaissances comprend une catégorie bactérienne commune correspondant à la catégorie du premier objet.

9. Procédé selon l'une quelconque des revendications 1 et 4 à 8, dans lequel l'image macroscopique comprend également un second objet, et le procédé comprend également :
l'obtention, par le dispositif électronique, d'une opération utilisateur pour une zone d'affichage du second objet, et l'émission de secondes informations d'invite qui indiquent un état d'hygiène du second objet.

10. Procédé selon l'une quelconque des revendications 1 à 9, dans lequel la première caméra est une caméra microscopique, la seconde caméra est un appareil photo, le dispositif électronique est un téléphone mobile et la catégorie du premier objet est une main.

11. Dispositif électronique comprenant un écran tactile, une mémoire et un ou plusieurs processeurs, dans lequel la mémoire stocke un ou plusieurs programmes, et lorsque les un ou plusieurs processeurs exécutent les un ou plusieurs programmes, le dispositif électronique est activé pour mettre en œuvre le procédé selon l'une quelconque des revendications 1 à 10.

12. Support de stockage informatique, comprenant des instructions informatiques, dans lequel, lorsque les instructions informatiques sont exécutées sur un dispositif électronique, le dispositif électronique est activé pour réaliser le procédé selon l'une quelconque des revendications 1 à 10.
